# EUROPEAN PATENT SPECIFICATION

(11) **EP 4 157 913 B1**
(45) Date of publication and mention of the grant of the patent: **23.10.2024**
(21) Application number: 21729498.2
(22) Date of filing: 28.05.2021
(51) Int. Cl.: C08G 18/32, C08G 18/44, C08G 18/76, C08L 75/06

(54) **POLYMER COMPOSITION AND METHOD OF MAKING A MEDICAL IMPLANT**
POLYMERZUSAMMENSETZUNG UND DEREN VERWENDUNG FÜR MEDIZINISCHE IMPLANTATE
COMPOSITION POLYMERE ET UTILISATION DE LADITE COMPOSITION POUR DES IMPLANTS MEDICAUX

(30) Priority: 29.05.2020 EP 20177535
(43) Date of publication of application: 05.04.2023
(73) Proprietor: Maastricht Universitair Medisch Centrum+, 6229 HX Maastricht (NL); University Maastricht, 6211 LK Maastricht (NL); DSM IP Assets B.V., 6221 BE Maastricht (NL)
(72) Inventor: OEVERING, Hendrik, 6100 AA ECHT (NL); GELISSEN, Franciscus Wilhelmus Maria, 6100 AA ECHT (NL); THIES, Jens Christoph, 6100 AA ECHT (NL); EMANS, Pieter, 6100 AA ECHT (NL); ROTH, Alex Kristian, 6100 AA ECHT (NL)
(74) Representative: dsm-firmenich IP
(86) International application number: PCT/EP2021/064317
(87) International publication number: WO 2021/239931

(56) References cited:
- CN-C- 1 215 890

## Description

### Field

The disclosed inventions relate to a polymer composition suitable for making a bone anchoring part of an orthopedic implant, to methods of making the polymer composition and of making an orthopedic implant comprising said polymer composition.

### Background

Orthopedic implants are medical implants used in orthopedic surgery concerning conditions that involve the musculosketetal system of a human or animal. This system provides for form, stability and movement of the body and is made up of the body's bones (the skeleton), muscles, cartilage, tendons, ligaments, joints, and other connective tissue (the tissue that supports and binds tissues and organs together). The musculoskeletal system's primary functions include supporting the body, allowing motion, and protecting vital organs. The joints and musculoskeletal tissues of the human body may be subject to traumatic injury, disease and degenerative processes that over time can lead to deterioration or failure of a joint; causing severe pain or immobility. Generally, the ability of a joint to provide pain free articulation and carry load is dependent upon the presence of healthy bone, cartilage and associated musculoskeletal tissues that provide a stable joint. In connection with present disclosure orthopedic surgery also relates to maintaining the motion in the various joints of the human body. Orthopedic implants include devices used in partial or total joint arthroplasty, knee and hip prostheses, and osteochondral implants. Examples of orthopedic implants include bone anchors, plugs and screws, which are applied to fixate implants like artificial ligaments and tendons, meniscus or labrum replacement devices, spinal implants like intervertebral cages, as well as cartilage replacement devices.

Cartilage is a smooth, connective tissue on the surface of the ends of bone where they meet to form a joint, which protects and cushions bone, and absorbs forces transmitted throughout the body. Cartilage is an elastic tissue that permits smooth movement of joints, but it is without direct blood supply and has limited self-healing capacity in case of wear or trauma. A frequent and significant cartilage injury causing pain and/or immobility is damage to the articular cartilage in the knee, that is in the joint formed between the femur and tibia. Long-term, such initially local defect(s) may - if left untreated- lead to further degeneration and damaged cartilage in the joints, and may require surgery using artificial prosthetic joints; like a partial or total knee replacement (UKR / TKR, also called hemi / total knee arthroplasty or HKA / TKA). Such total replacement surgery, however, may be problematic as most artificial joints have limited durability and subsequently needed revision procedures are associated with longer operation and hospitalization times and may induce complications, especially in older patients. In order to delay and possibly even avoid the need for a total joint replacement like TKR, orthopedic implants have been developed to locally replace damaged cartilage; thereby creating a new smooth joint surface at the damaged site. Such implants are often referred to as cartilage plugs.

Such known *cartilage plugs,* also called osteochondral constructs, cartilage replacement devices, or resurfacing implants, are typically made from metals, for example titanium. The use of metal implants, however, leads to high rates of revision surgery, which might be related to the large difference in mechanical properties, like stiffness and deformability, between metal and (sub)chondral bone and cartilage tissue. Alternative devices made from natural and/or synthetic materials have been described or proposed in numerous publications. Cartilage plugs often have a cylindrical or a mushroom-like shape and may comprise at least two parts; a cartilage replacing part and a bone anchoring part. The cartilage replacement part may be typically made from a flexible, resilient and abrasion resistant biocompatible material that mimics some properties of natural cartilage, whereas the bone anchoring part may be made from a more rigid and stiff material, including metal.

One approach is to make a plug from natural materials, including harvesting bone and cartilage from the patient (autogenous graft or autograft) and use of tissues from a genetically dissimilar donor of the same species (allograft or homograft). In US5782835, for example, an apparatus and method to implement such allograft approach is described. Use of such grafts, however, presents risks of infections or transmission of diseases.

Alternatively, orthopedic implants like a cartilage plug can be made from synthetic materials, like biocompatible polymers that may be biodegradable or biostable. Use of synthetic polymers would present advantages over metal implants, as polymers offer a large range of properties, may cause less damage to contacting tissue, and are not magnetic; thus more compatible with a medical imaging technique like MRI.

US2008/0249632A1 describes a cartilage plug that has a stepped-shoulder geometry comprising 4 or more layers, aiming at better distributing a load applied to the implanted plug and the surrounding tissue, and at reducing undesired movement. The different layers of the plug can be made from the same or from different materials, which may be selected from numerous natural and synthetic materials and may be porous or non-porous.

US2011/0218647A1 discloses a cartilage plug comprising a hydrogel, which contains a hydrophilic polymer, a fibrous filler and 40-80 mass% of water. The polymer is preferably crosslinked polyvinylalcohol. The implant would have a Young's modulus of 0.75-50 MPa, preferably 23-30 MPa, which enables initial compression to allow placing it in an opening and subsequent expansion for properly fitting.

US6626945B2 describes a cartilage plug that is formed of a laminated structure to match physiological requirements of the repair site. The plug may be of cylindrical shape and be formed from three different materials that are fused or bound together. In an embodiment a first layer, which upon implantation is closest to subchondral bone, is made from a biostable thermoplastic polyurethane (TPU) of Shore hardness 75 ShD. An intermediate layer of the implant is made from a TPU of 55 ShD hardness, whereas a third layer that is closest to the surface of the cartilage surrounding the implanted plug is made from a more flexible material like a TPU of hardness 80 ShA or from a thermoplastic hydrogel. This last layer is indicated to show properties similar to those of hyaline cartilage, which is the type of cartilage at the outer surface of an articulating joint; and the 75 ShD material would have an elastic modulus similar to subchondral bone.

WO2011/098473A1 describes orthopedic implants, like meniscus or spinal disc implants, which have two or more distinct sections that each comprise a different, but chemically related, polymeric material; such that sections are attached to each other at contact surfaces by interactions between said materials. Preferably the materials are chosen from blockcopolymers like thermoplastic polyurethanes (TPUs). The implants can be made by multi-component molding techniques. A meniscus prosthetic device is also described in WO2015/0135907A1, which comprises different parts made from two non-resorbable polymeric materials having a tensile modulus of at most 100 MPa and of at least 101 MPa, respectively. In experiments TPU materials with Shore hardness of 80 ShA and 75 ShD were used. It is indicated that the material may be a polymer composition comprising TPU and up to 25 mass% of radiopaque filler particles like barium sulphate.

In WO2007/007062A2 a cartilage repair implant is described wherein a resilient layer is bound to an anchor layer, which anchoring part is made from a bone cement composition that comprises an acrylate-based polymer containing calcium ions to facilitate bone ingrowth.

US2004/0188011A1 discloses a method of making a prosthetic bearing element comprising a rigid backing made from carbon fiber reinforced polymer and which backing supports a soft elastomeric polyurethane bearing liner, in which method improved bonding of the backing to the bearing liner is achieved by laser welding; that is by passing laser light through the transparent bearing liner to cause heat fusion at the interface of the liner and the laser-opaque backing.

In US2009/043398A1 a method of making an articulating surface implant such as a replacement plug is described, wherein a gradient in density, porosity and/or concentration is created in the implant by subjecting a viscous material to a centrifugal force; such as by spin casting. The viscous material may be a composite material comprising a polymer matrix and particles or fibers dispersed therein; the method resulting in an article having a concentration gradient in particles or fibers, and thus a gradient in stiffness.

US2008/0081061A1 discloses an orthopedic device that comprises a composite material based on a biocompatible polymer having ceramic particles dispersed therein and may further include ceramic-free polymer integrally attached to the composite material. The ceramic material may be in particle or fiber form and may be selected, like the polymer, from extensive lists. In an embodiment the polymer is ultra-high molar mass polyethylene (UHMWPE) and the ceramic includes hydroxyapatite (HA) particles. Such composite part is made by mixing UHMWPE powder with (optionally coated) HA particles, and compression molding the mixture.

Geary et al. describe in Mater. Sci: Mater. Med (2008) 19:3355-3363 (DOI 10.1007/s10856-008-3472-8) that thermoplastic polyurethanes, like commercially available Bionate^{®} polycarbonate urethane grades, have outstanding hydrolysis and ageing resistance; and are suitable biostable materials for use in making in vivo biomedical devices, for example devices for use in replacing diseased or damaged joints. Incorporating carbon fibers or hydroxyapatite (HA) particles in such polyurethanes via melt compounding may result in improved mechanical properties of the polymer material. It is also indicated, however, that such compounding step enhances polymer degradation resulting in significant reduction in molar mass of the polymer in the polymer composition. Especially in case of compounding TPU with HA, said degradation is shown to be more prominent than during a melt processing step like injection molding. In contrast to carbon fibers, a polyurethane composition based on TPU and HA particles did not show improved tensile properties.

CN1215890C discloses polyurethane compositions comprising 0.1-30 mass% of zinc oxide, titanium dioxide or zirconium dioxide nanoparticles, with 80-99% of the particles having a size smaller than 50 nm. Solvent-based compositions are prepared by high-speed mixing the nanoparticles into a solution of polyurethane, which compositions can be used to coat a substrate or to cast a film. The films or coated substrates are stated to show anti-coagulative properties and to be suited for use as medical products that come into contact with blood; such as catheters and artificial blood vessels.

### Summary

Although various synthetic polymeric materials have been proposed or described in literature for making a bone anchoring part of an orthopedic implant, there still appears a need for an implant material that enables making an implant for more durable replacement of for example local cartilage defects in a joint, and which implant can be monitored during and after implantation with common medical techniques.

Objects of the present disclosure include providing such polymeric material for making an orthopedic implant; for example an implant for resurfacing of a joint, such as for replacing locally damaged cartilage tissue in a knee. More specfically, present disclosure aims to provide such polymeric material suitable for making a bone anchoring part of an implant, and which material enables a durable and monitorable connection to bone tissue.

The aspects and embodiments of the present invention as described herein below and as characterized in the claims provide a polymer composition that is a.o. suitable for making a bone anchoring part of an orthopedic implant, showing good biocompatibility and mechanical properties compatible with bone tissue, and which implant can be monitored during and/or after implantation with medical imaging techniques like X-ray and MRI; and a method of making said polymer composition. An aspect of the invention is thus a polymer composition according to claim 1, more specifically a polymer composition suitable for making a bone anchoring part of an orthopedic implant, which implant may be suited for locally replacing damaged cartilage tissue in a joint, the polymer composition comprising a biostable thermoplastic polyurethane and 15-70 mass% of inorganic particles comprising a biocompatible transition metal compound, and wherein the inorganic particles have a particle size (D₅₀) in the range 0.1-5 µm.

Orthopedic implants like cartilage replacement plugs, wherein the polymer composition is used, may have a cylindrical or mushroom-like shape and may comprise at least two parts; said bone anchoring part and a cartilage replacing part that is typically made from a resilient and abrasion resistant biocompatible material. It was found that the relatively rigid TPU composition comprising said inorganic particles allows making an anchoring part that can for example be inserted and/or press-fitted into a pre-drilled bone hole to form a firm and durable connection to bone, and which implant part and its connection to bone may be visualized or monitored over time with for example X-ray or MRI methods. The polymer composition shows favorable crystallization behavior and its (mechanical) properties are better than those of similar compositions based on for example HA filler particles. Further advantages of using the polyurethane composition include freedom in designing and dimensioning the implant, and in making the implant with common techniques like injection molding that allow also more complex shapes. Especially when the implant also comprises a further part made from a thermoplastic material compatible with the polyurethane composition, like a more flexible type of TPU as a cartilage replacement part, the implant may be made with a 2-component injection molding technique; which is a relatively simple method that generally results in sufficient adhesion between the polyurethane composition in the bone anchoring part and the flexible TPU in the cartilage replacement part, without the need for an adhesive component.

In other aspects, the invention concerns methods of making said polymer composition.

In further aspects, the invention relates to use of a polymer composition according to present disclosure in making an orthopedic implant or a bone anchoring part of an orthopedic implant, and to a method of making an orthopedic implant or a bone anchoring part of an orthopedic implant, like a plug or a screw, the method comprising a step of injection molding the implant or the bone anchoring part from the polymer composition according to present disclosure; such as by forming an implant with a multi-component injection molding process comprising a step of molding the bone anchoring part from the polymer composition. Another aspect concerns an orthopedic implant having a bone anchoring part comprising said polymer composition.

### Brief description of Figures

The invention will be further elucidated by the following illustrative figures, without being restricted thereto.
Figure 1 schematically depicts a 2-part cylindrical cartilage plug.
Figures 2A and 2B schematically show a mushroom-like cartilage plug in two different views.
Figure 3 schematically depicts a cross-sectional view of a mushroom-like plug comprising a bone anchoring part (3a) having 2 'stems' (3b' and 3b"). In Figures 1-3 like numbers represent like elements.

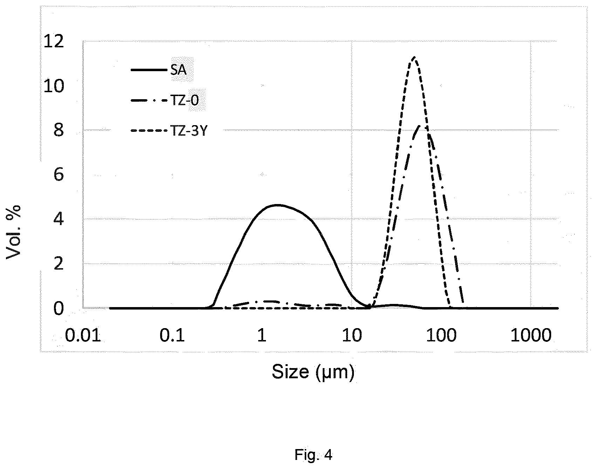

Figure 4 shows particle size distributions as measured on 3 grades of zirconia.

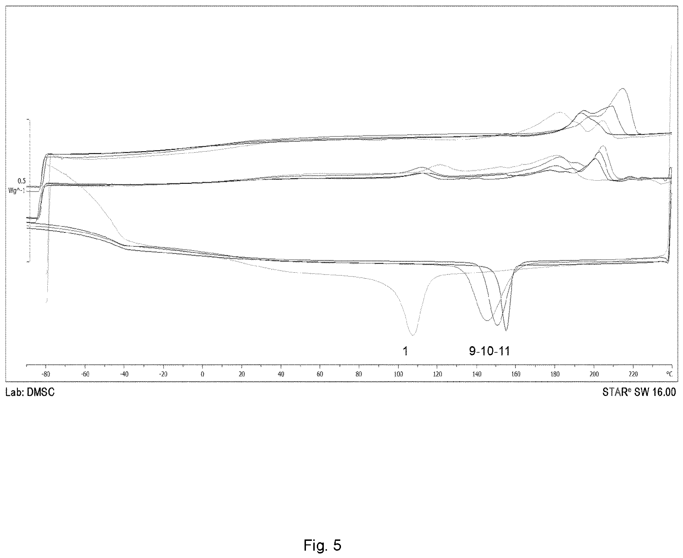

Figure 5 represents DSC curves (heating-cooling-reheating) as obtained on unfilled polyurethane and on corresponding polyurethane compositions containing 20, 40 and 60 mass% of zirconia (SA).
Figure 6 provides scoring of Bone to Implant Contact (BIC, %) as an indication of osseointegration for implanted plugs M (metal), U (unfilled polyurethane) and I (invention; zirconia-filled polyurethane, BCP-coated), 6 and 12 months after implantation in knees of goats.
Figures 7A-C show representative micrographs of histological slices taken from goat-implanted plugs M, U and I (after 6 months).
Figure 8 presents Modified Mankin score (MMS) results of articulating cartilage quality on the opposing bone surface of a joint having an implanted plug M or I as compared with a sham-operated joint (after 6 and 12 months).

### Detailed Description

Within the context of present disclosure, a *biocompatible* material is biologically compatible by not producing a toxic, injurious, or immunologic response when in contact with living tissue. *Biodegradable* means a material is susceptible to chemical degradation or decomposition into simpler components under physiological conditions or by biological means, such as by an enzymatic action. *Biostable* or bioinert means that the material is substantially non-biodegradable under conditions and time of intended use in contact with living tissue.

In accordance with an aspect, the invention provides a polymer composition comprising a biostable thermoplastic polyurethane and 15-70 mass% of biocompatible inorganic particles comprising a transition metal compound, which polymer composition can suitably be used for making an orthopedic implant or at least a bone anchoring part thereof, for example a biostable implant suitable for use in repair of damaged tissue, like cartilage tissue in a joint.

The polymer composition suitable for making a bone anchoring part comprises a biostable thermoplastic polyurethane (TPU). A thermoplastic polyurethane is a non-crosslinked polyurethane, which has essentially linear polymer chains, is soluble in a good solvent and can be melted by increasing temperature and be re-solidified upon subsequent cooling; allowing melt processing via e.g. extrusion or injection molding. Thermoplastic polyurethanes are typically block copolymers (also called segmented copolymers).

Block copolymers are polymers comprising multiple blocks (also called segments) of polymers (including oligomers) that are chemically distinct, and which show different thermal and mechanical properties, and different solubilities. Often the blocks in a block copolymer comprising two (or more) types of blocks are referred to as being 'hard' and 'soft' polymer blocks, such (chemically) different blocks resulting in microphase separation into domains that are rich in either hard or soft blocks. The hard block in a block copolymer typically comprises a rigid or high modulus polymer, with a melting temperature (Tₘ) or a glass transition temperature (T_{g}) higher than the use temperature, typically of about 35-40 °C in case of biomedical applications. The soft blocks in the block copolymer generally comprise a flexible, low modulus, amorphous polymer with a T_{g} lower than 25 °C, preferably lower than 0 °C. As for most mechanical properties, thermal parameters like Tₘ and T_{g} are generally determined on dry samples; using well-known techniques like DSC or DMA. In such phase-separated block copolymers, the hard segments function as physical (and non-permanent, thermally reversible) crosslinks for the flexible soft segments, resulting in materials having properties ranging from fairly stiff and rigid to flexible and elastic, depending on e.g. the ratio and type of hard vs soft blocks. Depending on type and content of hard blocks, the polyurethane block copolymer may show good stability and elasticity over a desired temperature range without the need for chemical crosslinking; and can generally be processed as a thermoplastic. The term thermoplastic polyurethane basically denotes a family of polymers with a backbone comprising the reaction product of at least three principle components; which are a diisocyanate, a diol chain extender and a polymer diol or macroglycol. Optionally, a monofunctional compound may be used as a further component functioning as a chain stopper and forming (non-reactive) endgroups. In embodiments, the backbone of the polyurethane or TPU applied in present invention is substantially linear.

In embodiments, the TPU comprises hard blocks that include urethane groups and optionally urea groups in repeating units, which groups have resulted from reaction of a diisocyanate with a diol and optionally a diamine as respective chain extenders.

Suitable diisocyanates include aromatic, aliphatic and cycloaliphatic compounds, having an average of 1.9-2.1 isocyanate groups per molecule. In an embodiment, the diisocyanate comprises 4,4'-diphenylmethane diisocyanate (MDI), 2,4-toluene diisocyanate, 2,6-toluene diisocyanate (TDI), 1,4-phenylene diisocyanate, hexamethylene diisocyanate (HDI), tetramethylene-1,4-diisocyanate, cyclohexane-1,4-diisocyanate, dicyclohexylmethane-4,4'-diisocyanate (CHMDI), isophorone diisocyanate (IPDI), or a mixture thereof. In an embodiment, the diisocyanate comprises hexamethylene diisocyanate, dicyclohexylmethane 4,4'-diisocyanate, isophorone diisocyanate, or a mixture thereof. In an embodiment, the diisocyanate consists of hexamethylene diisocyanate, dicyclohexylmethane 4,4'-diisocyanate, isophorone diisocyanate, or a mixture thereof. In another embodiment, the diisocyanate comprises 4,4'-diphenylmethane diisocyanate, 2,4-toluene diisocyanate, 2,6-toluene diisocyanate, or 1,4-phenylene diisocyanate. In an embodiment, the diisocyanate consists of 4,4'-diphenylmethane diisocyanate, 2,4-toluene diisocyanate, 2,6-toluene diisocyanate, 1,4-phenylene diisocyanate, or a mixture thereof. In an embodiment, the molar mass of the diisocyanate is from 100 to 500 g/mol. In an embodiment, the molar mass of the diisocyanate is from 150 to 260 g/mol.

Chain extenders are typically low molar mass aliphatic compounds, having two or more, preferably two, hydroxyl or amine groups. Bifunctional chain extenders result in linear, generally thermoplastic polymers, whereas multifunctional chain extenders and/or isocyanates would lead to branched or cross-linked products. In an embodiment, the bifunctional chain extender has a molar mass of at least 60 g/mol, at least 70 g/mol, at least 80 g/mol, at least 90 g/mol, or at least 100 g/mol. In an embodiment, the chain extender has a molar mass of at most 500 g/mol, at most 400 g/mol, at most 300 g/mol, at most 200 g/mol, or at most 150 g/mol. In an embodiment, the chain extender comprises ethylene glycol, diethylene glycol, propylene glycol, dipropylene glycol, 1,3-propanediol, 1,4-butanediol, 1,5-pentanediol, 1,6-hexanediol, or 1,8-octanediol; and/or such corresponding diamines. In embodiments, the thermoplastic polyurethane comprises only diol chain extenders.

In other embodiments, the TPU comprises hard blocks having both urethane and urea linkages. The advantage thereof is enhanced interaction between the hard blocks, resulting in higher softening temperature and/or allowing a higher content of soft blocks; resulting in block copolymers showing enhanced flexibility and elasticity, and excellent flex life or fatigue resistance. Depending on the ratio diol/diamine, the polyurethane chains may show such strong interactions that at a melt processing temperature thermal degradation may occur to such extend that solution processing is to be preferred for optimal performance. Commercially available examples of such polyurethanes comprising both urethane and urea linkages, also referred to as polyurethane ureas, include Biospan^{®} products (available from e.g. DSM Biomedical BV, Sittard-Geleen NL).

In further embodiments, the thermoplastic polyurethane comprises soft blocks derived from at least one aliphatic polymer diol or polyol, which is chosen from the group consisting of polyethers, polyesters, polyacrylates, polyolefins and polysiloxanes (also called silicones); which polymers are bifunctional with hydroxyl (or amine) terminal groups. Such polymer diols for the soft blocks are understood herein to include oligomers, homopolymers and copolymers, and polyesters are considered to include polycarbonates. Generally known polyurethane block copolymers and methods to prepare these copolymers are described in a.o. US4739013, US4810749, US5133742 and US5229431.

In embodiments of the present disclosure the thermoplastic polyurethane comprises as soft block at least one polymer diol chosen from an aliphatic polyester diol, aliphatic polycarbonate diol, an aliphatic polyether diol, a poly(isobutylene) diol and a polysiloxane diol. Like or chain extenders, also some amine-functional soft blocks can be used, resulting in additional urea linkages. Biocompatibility and biostability of such polyurethane block copolymers in the human body has been proven.

Mechanical and other properties of a thermoplastic polyurethane can be tailored by varying chemical compositions and/or molar masses of the blocks. The hard blocks of a thermoplastic polyurethane contained in the composition of the invention may have a molar mass of about 160 to 10,000 Da, and more preferably of about 200 to 2000 Da. The molar mass of the soft segments may be typically about 200 to 100,000 Da, and preferably at least about 400, 600, 800 or 1000 Da and at most about 10,000, 7500, 5000, 4000, 3000 or 2500 Da. Within the context of present disclosure, molar mass of polymers and oligomers forming blocks in the polymer refers to the number average molar mass (Mₙ), as for example derived from GPC measurements. The ratio of soft to hard blocks can be chosen to result in certain stiffness or hardness of the polyurethane. Typically, hardness of the polyurethane as measured with the Shore durometer hardness test using A or D scales may be from 40 ShA up to 90 ShD, generally representing a flexural modulus range of about 10 to 2000 MPa. In embodiments, the thermoplastic polyurethane comprised in the composition has a hardness from 45 ShA to 90 ShA, preferably at least 50, 55 or 60 ShA. The advantage of using a TPU of relatively low hardness may be a higher toughness of the resulting composition further comprising a transition metal compound like zirconia. In other embodiments the TPU in the polymer composition has a hardness of from 90 ShA to 90 ShD, as this will result in higher stiffness of the composition. In further embodiments, the TPU has a hardness of at least 40, 50 or 60 ShD and of at most 85 or 80 ShD, for a good balance between stiffness and processing behavior.

In further embodiments of present invention, the thermoplastic polyurethane comprises an aliphatic polyether, an aliphatic polyester or an aliphatic polycarbonate in soft blocks, more specifically an aliphatic polycarbonate. Compositions of soft blocks are preferably chosen such that an essentially amorphous oligomer or polymer having a T_{g} below 10, 0, and preferably below -10 °C results. Suitable aliphatic polyethers include polypropylene oxide) diols, poly(tetramethylene oxide) diols, and their copolymers. Suitable aliphatic polyesters are generally made from at least one aliphatic dicarboxylic acid and at least one aliphatic diol. Aliphatic polycarbonate diols are based on similar aliphatic diols as used for polyester diols, and can be synthesized via different routes as known in the art. Suitable examples include poly(hexamethylene carbonate) diols and poly(tetrahydrofuran carbonate) diols. Such polycarbonate-based TPUs show favorable biocompatibility like hemocompatibility, and enhanced biostability. In an embodiment, the soft block of the TPU is based on a poly(hexamethylene carbonate) diol, a poly(polytetrahydrofuran carbonate) diol, or a mixture thereof. In a preferred embodiment, the soft blocks of the TPU contain or are substantially based on poly(hexamethylene carbonate) diol.

In further embodiments, the soft block of the TPU comprises a polysiloxane diol such as a poly(dimethyl siloxane) diol, a polycarbonate diol, or a poly(tetramethylene oxide) diol. In an embodiment, the soft block is based on a polysiloxane diol, a polycarbonate diol, a poly(tetramethylene oxide) diol, or a mixture thereof. In an embodiment, the soft block comprises a mixture of two or more of a polysiloxane diol, a polycarbonate diol, or a poly(tetramethylene oxide) diol. Such mixtures allow making biocompatible polyurethanes that show enhanced hydrolytic stability combined with high toughness. In an embodiment, the soft block is based on a mixture of two or more of a polysiloxane diol, a polycarbonate diol, or a poly(tetramethylene oxide) diol. In an embodiment, the soft block comprises a polysiloxane diol and one or more of a polycarbonate diol and a poly(tetramethylene oxide) diol. In an embodiment, the soft block is based on a polysiloxane diol and one or more of a polycarbonate diol and a poly(tetramethylene oxide) diol.

In an embodiment, the soft blocks may further comprise a C₂-C₁₆ fluoroalkyl diol or C₂-C₁₆ fluoroalkyl ether diol. In an embodiment, the soft block in the polyurethane backbone comprises the residue of 1H,1H,4H,4H-Perfluoro-1 ,4-butanediol, 1H,1H,5H,5H-Perfluoro-1,5-pentanediol, 1H,1H,6H,6H-perfluoro-1,6-hexanediol, 1H,1H,8H,8H-Perfluoro-1,8-octanediol, 1H,1H,9H,9H-Perfluoro-1,9-nonanediol, 1H,1H,10H,10H-Perfluoro-1,10-decanediol, 1H,1H,12H,12H-Perfluoro-1,12-dodecanediol, 1H,1H,8H,8H-Perfluoro-3,6-dioxaoctan-1,8-diol, 1H,1H,11H,11H-Perfluoro-3,6,9-trioxaundecan-1,11-diol, fluorinated triethylene glycol, or fluorinated tetraethylene glycol.

In an embodiment, the C₂-C₁₆ fluoroalkyl diol or C₂-C₁₆ fluoroalkyl ether diol has an Mₙ of at least 150 g/mol, at least 250 g/mol, or at least 500 g/mol. In an embodiment, the fluoroalkyl diol or fluoroalkyl ether diol has a molar mass of at most 1500 g/mol, at most 1000 g/mol, or at most 850 g/mol. In an embodiment, the C₂-C₁₆ fluoroalkyl diol or C₂-C₁₆ fluoroalkyl ether diol is present in an amount of at least 1 mass%, at least 2 mass%, or at least 5 mass%, based on the total mass of the polyurethane. In an embodiment, the C₂-C₁₆ fluoroalkyl diol or C₂-C₁₆ fluoroalkyl ether diol is present in an amount of at most 15 mass%, at most 10 mass%, or at most 8 mass%, based on the total mass of the polyurethane.

In embodiments, the polyurethane may comprise one or more hydrophobic or hydrophilic endgroups. An endgroup is a generally a non-reactive moiety present at a terminal end of a molecule. In an embodiment, the polyurethane comprises an endgroup at each terminus of the backbone; i.e. it has an average of about 2 endgroups. In an embodiment, the endgroup is a linear compound. In another embodiment, the endgroup is branched. An endgroup may have been formed by reacting a terminal isocyanate group present during or after forming the polymer backbone with a co-reactive group on a monofunctional compound, also called chain stopper. For instance, a formulation for forming a polyurethane may comprise a diisocyanate, a polymeric aliphatic diol, a chain extender, and a monofunctional alcohol or amine; like 1-octanol or octylamine to form a C₈ alkyl endgroup.

In embodiments, the endgroup is a hydrophobic endgroup, for example comprising a C₂-C₂₀ alkyl, a C₂-C₁₆ fluoroalkyl, a C₂-C₁₆ fluoroalkyl ether, a hydrophobic poly(alkylene oxide) or a polysiloxane, including copolymers thereof. In an embodiment, the hydrophobic poly(alkylene oxide) is polypropylene oxide), poly(tetramethylene oxide) or a copolymer thereof. In an embodiment, the hydrophobic endgroup is a polysiloxane, like a poly(dimethyl siloxane). In an embodiment, the endgroup comprises C₂-C₂₀ alkyl, C₂-C₁₆ fluoroalkyl, C₂-C₁₆ fluoroalkyl ether, or a hydrophobic poly(alkylene oxide). Such endgroups may be formed with monofunctional alcohols, including carbinols, or amines of the foregoing. Such polyurethane elastomers having hydrophobic endgroups are found to positively affect properties of the polyurethane and its interaction with other materials, including other polymers like polyolefins and bodily tissue and fluid like blood.

In an embodiment, the hydrophobic endgroup comprises C₂-C₁₆ fluoroalkyl or C₂-C₁₆ fluoroalkyl ether. Such endgroups may be formed with monofunctional alcohols or amines comprising C₂-C₁₆ fluoroalkyl or C₂-C₁₆ fluoroalkyl ether. In an embodiment, the endgroup is formed from 1H,1H-Perfluoro-3,6-dioxaheptan-1-ol, 1H, 1H-Nonafluoro-1-pentanol, 1H,1H-Perfluoro-1-hexyl alcohol, 1H,1H-Perfluoro-3,6,9-trioxadecan-1-ol, 1H,1H-Perfluoro-1-heptyl alcohol, 1H,1H-Perfluoro-3,6-dioxadecan-1-ol, 1H,1H-Perfluoro-1-octyl alcohol, 1H,1H-Perfluoro-1-nonyl alcohol, 1H,1H-Perfluoro-3,6,9-trioxatridecan-1-ol, 1H,1H-Perfluoro-1-decyl alcohol, 1H,1H-Perfluoro-1-undecyl alcohol, 1H,1H-Perfluoro-1-lauryl alcohol, 1H,1H-Perfluoro-1-myristyl alcohol, or 1H,1H-Perfluoro-1-palmityl alcohol.

In another embodiment, the endgroup is a hydrophilic endgroup, which is formed from a hydrophilic monofunctional alcohol or amine compound. Such compound is typically soluble in water and may show surface activity; like a polyethylene oxide or a sulfonate-functional compound. Such hydrophilic endgroups may affect interactions with or adhesion to other materials, for example enhance dispersion of certain inorganic filler particles.

In another embodiment, the polyurethane comprises a mixture of hydrophobic and hydrophilic endgroups. Such modification allows to control the hydrophobic vs hydrophilic balance of the polymer. A general advantage of using a TPU having endgroups is to modify and control properties of the polymer and polymer composition without incorporating additives that may introduce potential problems with migration from the polymer composition and implant.

In an embodiment, the endgroup is monomeric and has a molar mass of 200 g/mol or more, 300 g/mol or more, or 500 g/mol or more; and of 1,000 g/mol or less or 800 g/mol or less. In other embodiments, the endgroup is polymeric and has a molar mass of 10,000 g/mol or less, 8,000 g/mol or less, 6,000 g/mol or less, or 4,000 g/mol or less. In an embodiment, the endgroup is polymeric and has a molar mass of 500 g/mol or more, 1,000 g/mol or more, or 2,000 g/mol or more.

In an embodiment, the endgroup is present in an amount of at least 0.1 mass%, at least 0.2 mass%, at least 0.3 mass%, or at least 0.5 mass%, based on the total mass of the polyurethane. In an embodiment, the endgroup is present in an amount of at most 3 mass%, at most 2 mass% or at most 1 mass%, based on the total mass of the polyurethane. In an embodiment, the endgroup is present in an amount of at least 0.1 mass%, at least 0.2 mass%, at least 0.3 mass%, or at least 0.5 mass%; and in an amount of at most 3 mass%, at most 2 mass% or at most 1 mass%, based on the total mass of the polyurethane.

In an embodiment, the polyurethane comprises less than 0.1 mass% of endgroups, based on the total weight of the polyurethane. In an embodiment, the polyurethane is substantially devoid of endgroups. In an embodiment, the polyurethane is devoid of endgroups.

The hard blocks in the TPU are typically based on an aromatic diisocyanate like toluene diisocyanate (TDI) or methylenediphenyl diisocyanate (MDI), and a low molar mass aliphatic diol like 1,4-butanediol. Polyether and polycarbonate polyurethanes may be suitably used for biomedical applications, in view of their flexibility, strength, biostability, biocompatibility and wear resistance. A TPU containing a combination of a polyether and a polysiloxane or a polycarbonate and a polysiloxane in the soft blocks shows a unique combination of properties and may advantageously be used as the polyurethane in the polymer composition. Commercially available examples of such polymers include Pursil^{®} and Carbosil^{®} products (available from DSM Biomedical BV, Sittard-Geleen NL).

In further embodiments, the TPU may be a blend of two or more polyurethanes, for example a blend of two biostable, biocompatible TPU grades at least having different hardness, like a combination of a TPU having 50-80 ShA and a 70-85 ShD grade. In such blend of TPUs, the two polymers may also differ in the type of soft blocks. An example thereof is a mixture of a low hardness TPU comprising a polysiloxane in the soft blocks and a rigid TPU comprising a polycarbonate in soft blocks. Such TPU blend may offer an advantageous combination of stiffness and toughness

In other embodiments the TPU may comprise one or more customary additives that are biocompatible, i.e. allowed for the targeted use of the TPU and the polymer composition in a medical implant; in addition to e.g. catalyst residues. Examples of additives include stabilizers, anti-oxidants, processing aids, lubricants, surfactants, antistatic agents, colorants, etc.. The additives may be present in the typically effective amounts as known in the art, such as 0.01-5 mass% based on the amount of polyurethane and additives, preferably 0.1-2 mass%. In another embodiment, the TPU is substantially free of additives.

In embodiments, the polymer composition substantially consists, or consists of a) 30-85 mass% of a biostable thermoplastic polyurethane and b) 15-70 mass% of biocompatible particles comprising a transition metal compound, with the sum of a) and b) being 100 mass%.

In other embodiments, the polymer composition consists of a) 20-85 mass% of a biostable thermoplastic polyurethane as described above, b) 15-70 mass% of biocompatible particles comprising a transition metal compound, and c) 0-10 mass% of other compounds, with the sum of a) - c) being 100 mass%. Examples of other compounds include bioactive compounds like anti-microbial or anti-inflammatory agents, an active compound or drug that reduces pain or improves healing or bone formation; additives typically applied in polymer composite compositions like stabilizers, dispersion agents, or other compounds purposely added; but also residual amounts of solvents that may for example have been used in making the composition, including for cleaning equipment used. In embodiments, the composition -and parts made therefrom- comprise at most 5, 4, 3 or 2 mass% of other compounds, and at most 1000 ppm of solvent, preferably at most 800, 600, 500 or 400 ppm of solvent.

The polymer composition comprises biocompatible inorganic particles comprising a radiodense transition metal compound. A transition metal is defined within the context of present application as one of the elements referred to as such in the periodic table of elements, including the lanthanide series. Suitable transition metal compounds are oxides (or other salts) of one or more transition metals, which compounds combine inertness to TPU and related processing conditions, biocompatibility, radiopacity, and MRI compatibility. Radiopacity or radiodensity, and radiopaque or radiodense, means the inorganic particles inhibit passage of (or absorb) the radio-wave and X-ray portion of the electromagnetic spectrum to such extend that enough contrast with natural tissue is visible with medical X-ray imaging techniques (also called radiographic imaging). Factors contributing to radiopacity are electron density and atomic number. MRI compatibility or compatible means the material poses no known hazards in all MRI environments; i.e. it is non-conducting, non-metallic and non-magnetic. Such radiopaque and MRI-compatible particles may show contrast with natural tissue on MRI images.

In embodiments, the polymer composition comprises biocompatible transition metal salt particles, or preferably biocompatible transition metal oxide particles as inorganic particles.

In embodiments, the polymer composition comprises biocompatible inorganic particles that comprise a salt, preferably an oxide of at least one of titanium (Ti), zinc (Zn), yttrium (Y), zirconium (Zr), lanthanium (La), ytterbium (Yb), hafnium (Hf), and tantalum (Ta). In other embodiments, the polymer composition comprises inorganic particles comprising a salt, preferably an oxide of at least one of Ti, Zn, Y, Zr, and Ta. Alternatively, the polymer composition comprises inorganic particles substantially consisting of, or consisting of one or more of said salts or oxides. In further embodiments, the polymer composition comprises inorganic particles substantially consisting of or consisting of a salt, preferably an oxide of at least one of Ti, Zn, and Zr.

In embodiments, the polymer composition comprises particles comprising an oxide of titanium, preferably the polymer composition comprises particles that substantially consist or consist of titania. Titania is also referred to as titanium dioxide or TiO₂. Titania occurs in different mineral forms, like rutile and anatase, and is mostly used as a white pigment in paints, plastics, foods, toothpastes and pills.

In embodiments, the polymer composition comprises particles comprising an oxide of zinc, preferably the polymer composition comprises particles that substantially consist or consist of zinc oxide (ZnO). Zinc oxide as occuring in nature typically contains a number of impurities, and is therefore generally synthesized from metallic zinc. Pure zinc oxide is a white powder that is applied in many different applications, including paints, as filler in plastics, rubber and cements, in ceramics, and in dentistry and skin care products (in view of its anti-bacterial properties).

In embodiments, the polymer composition comprises particles comprising an oxide of zirconium, preferably the polymer composition comprises particles comprising zirconia. In embodiments, the inorganic particles substantially consist of or consist of zirconia. Zirconia is also referred to as zirconium dioxide or ZrO₂, a white crystalline oxide of zirconium.

The main use of zirconia is in the production of hard ceramics, for example by sintering at high temperature. Within the biomedical field such ceramic use is typically in dentistry as crowns and bridges. Other uses include protective, optical and thermal barrier coatings, ceramic knives and as diamond simulant in jewelry. Unlike many other mineral particles, zirconia is seldomly used as a filler or reinforcing agent in thermoplastic polymer compositions (also referred to as polymer compounds).

Zirconia as such is chemically stable, although it may undergo phase changes at high temperatures; that is at temperatures much higher than during compounding with a thermoplastic polyurethane, during injection molding of the present composition or during use of an implant made therefrom. Commercially available zirconia grades may contain other elements as dopants to thermally stabilize certain phases; like MgO, Y₂O₃, CaO or Ce₂O₃ having been added in amounts from 1 to more than 10 mol%. In addition, zirconia grades may comprise small amounts of elements like Hf, Al, Si, Fe, Na. Within the context of this disclosure, zirconia is therefore understood to comprise substantially pure ZrO₂ as well as mixed oxides comprising ZrO₂ and up to about 20 mass% of other inorganic oxides as mentioned above, preferably at most 15, 10 or 5 mass%.

The polymer composition, comprising polyurethane and the inorganic particles like titania, zirconia and/or zinc oxide particles, is radiopaque and may thus be distinguished from other material and tissue with medical X-ray techniques. The particles not being magnetic, their addition to polyurethane also enables imaging a part made from the present composition with MRI techniques, which is not possible with metal implants that are commonly used in orthopedic procedures. An implant made from the present polymer composition may thus be visualized using such common medical imaging techniques as X-ray and MRI; enabling monitoring during surgical procedures to properly position the implant at a targeted implant site as well as post-operative inspection of its position in relation to surrounding tissues.

The inorganic particles in the polymer composition typically have a particle size in the range 0.1 - 5 µm. Within present disclosure particle size of the inorganic particles is the D₅₀ value, i.e. the median diameter or the medium value of particle size distribution, as measured with light diffraction according to ISO 13320:2009, e.g. with a Malvern Mastersizer 2000. Particle size relates to size of the particles as dispersed in water, which may be different from particle size distribution in a polymer composition; as primary particles may not de-agglomerate or disperse in the same way as during mixing with polymer.

The inorganic particles in the polymer composition may have different types of particle shape, and may be of regular or of irregular form. Particle shape may range from virtually spherical to more elongated or flat shapes; like a cigar-, platelet-, needle- or fiber-like shape; with a cross-section that can be round, oval, triangular, rectangular, square, and with an average aspect ratio from 1 to more than 10. An advantage of substantially round particles may be isotropic properties of the composition, whereas elongated shapes may result in compositions with better mechanical properties, but which may depend on orientation of said particles. In embodiments, the polymer composition comprises a mixture of particles of different shapes.

In embodiments the particles have a D₅₀ size of at least 0.10, 0.15, 0.20, 0.25 or 0.30 µm, as handleability, like flow and dosing behavior, generally improves with particle size. In view of dispersibility in polyurethane and mechanical properties of the polymer composition, particle size is at most 5.0, 4.5, 4.0, 3.5, 3.0, 2.5 or 2.0 µm. The particles in the composition may also be a mixture of different sizes, like a mixture of particles having a size in the lower end and a size in the higher end of said ranges; for example to optimize density and mechanical properties like stiffness or toughness of the composition.

In embodiments, the polymer composition contains a biostable thermoplastic polyurethane and 15-70 mass% of inorganic particles comprising a transition metal compound, preferably zirconia, particles. A relatively high amount of such particles will enhance rigidity, for example tensile modulus, and radiopacity of a part made from the composition, but may deteriorate extensibility and toughness of the composition. Also, polymer degradation due to shear during compounding to make the composition may be enhanced by high amounts of particles. In embodiments, the composition therefore contains at least 20, 25, 30, or 35 mass% of inorganic particles and at most 68, 66, 64, 62, 60, 58, 56, 54 52, 50, 48 or 46 mass%.

The polymer composition may also contain a combination of different particles, for example zirconia particles combined with one or more other biocompatible inorganic particles, including other transition metal compound particles as defined above like titania and zinc oxide, and/or natural mineral particles like clay, mica, talcum, etc.. Other inorganic particles typically have a similar particle size range and shape as the transition metal compound or oxide particles; but may also be of different size and have a different particle shape, to result in a combination of for example spherical and needle- or fiber-like particles. The other particles may be (bio)inert like zirconia, but may also show bioactivity like osteoconductivity; such as bioglass or other silicated bioceramics.

In embodiments, at most 25 mass% of the total amount of transition metal compound particles like zirconia and other inorganic particles that is present in the polymer composition is formed by the other inorganic particles, preferably at most 20, 15, 10 or 5 mass%.

In further embodiments, the polymer composition is substantially free from particles based on calcium phosphates like hydroxyapatite, in view of potential enhanced degradation as reported in literature, and as observed upon making such polyurethane compositions (see experiments). More generally, in embodiments the composition is substantially free from inorganic particles or other compounds that may initiate or enhance (hydrolytic) degradation of polyurethane, because such particles or compounds comprise reactive groups that promote such degradation or have such hygroscopic properties that they cannot be suitably dried to a sufficiently low moisture content; such as to below 250, 150 or 100 ppm.

In other aspects, the invention provides a method of making the polymer composition, as described above including all variations and preferred embodiments and combinations thereof, comprising steps of
- Providing a biostable thermoplastic polyurethane with a moisture content of at most 300 ppm;
- Providing inorganic particles comprising a biocompatible transition metal compound and having a moisture content of at most 250 ppm;
- Optionally mechanically or chemically treating the inorganic particles;
- Optionally providing other compounds having a moisture content of at most 250 ppm; and
- Mixing the polyurethane, the inorganic particles and other compounds.

The method of making the polymer composition can use different mixing equipment and processes, as are known by a skilled person; for example by using a solvent-assisted mixing process or a melt-mixing process. In general, the polyurethane polymer and any transition metal compound, zirconia or other compounds like inorganic particles and/or additives to be added are thoroughly dried before mixing using known methods. Typically, the polyurethane, as described above including all variations and preferred embodiments, is dried for several hours, e.g. from 4 to 30 h, at temperatures below its softening or melting point to obtain a moisture content of at most 300 ppm, preferably at most 250, 200 or 150 ppm. The inorganic particles, as described above including all variations and preferred embodiments, may be dried at relatively high temperature during prolonged time, for example at 100-200 °C during 20-40 h, to obtain a moisture content of at most 250 ppm, preferably at most 150 or 100 ppm.

In embodiments, the method comprises a step of mechanically or chemically (pre)treating the (dried) inorganic particles, to enhance properties of the resulting polymer composition. In embodiments, mechanically treating comprises milling or grinding the particles, optionally in the presence of an auxiliary component. Such auxiliary component may be a low viscosity or a viscous liquid, a dispersion aid and/or a polymer, each being biocompatible and compatible with the polyurethane. Such treatment may be facilitated with sonication to break down aggregates of particles and/or enhance dispersion. Such mechanical treatment step may result in a powder, a dispersion, a paste or a solid composition comprising the inorganic particles, use of which may result in an improved dispersion level of the particles in polyurethane in subsequent mixing step. The treated inorganic particles may be dried to arrive at the desired moisture level of at most 250 ppm.

In further embodiments, the method comprises a step of chemically treating the (dried) inorganic particles, to change the type and amount of functional groups at the surface of the particles; and therewith dispersibility in and/or interfacial adhesion of the particles to polyurethane. The treatment may include a corona treatment, a plasma treatment, and/or a wet chemical treatment. A corona or plasma treatment as such can modify the surface of the particles as is known to a skilled person, but may also be combined with wet chemical modification. In a wet chemical treatment, the particles are typically first dispersed in a suitable solvent, and then a reagent is added, generally in an amount of 5-300 mass% relative to particles. Dispersion may be facilitated with sonication to break down aggregates of particles. Suitable reagents are for example organic compounds having alkyl, amine, carboxylic or peroxide functionality, or silane compounds. Examples include carbon dioxide, oxygen, unsaturated hydrocarbons, alkyl amines, carboxylic acids, and various amine- and/or alkoxy-functional silanes like 3-aminopropyltriethoxylsilane. Such compounds are also referred to as coupling agents in the art. In view of targeted medical use of the polymer composition, addition of other components like a catalyst is preferably omitted and un-reacted reagents and solvent are substantially fully removed after the pretreatment, and moisture level is brought to at most 250 ppm. The skilled person will be able to select a reagent and suitable treatment conditions, based on general knowledge and optionally some routine experiments.

In embodiments, other compounds as described above for the polymer composition may be provided, which compounds have a moisture content of at most 250 ppm. Examples of other compounds include bioactive compounds, stabilizers and compounds that aid in dispersing the inorganic particles in the TPU during mixing.

In embodiments, the method of making the polymer composition comprising a biostable thermoplastic polyurethane and 15-70 mass% of inorganic particles comprises adding dried particles or a dried masterbatch comprising such particles during synthesis of the polyurethane. For example, such addition can be done before a 1-step polymerization reaction by mixing with, for example liquid, starting chemicals, or during a 2-step polymerization, e.g. by mixing particles with prepolymer before or during a second polymerization step.

In other embodiments, the method of making the polymer composition comprising a biostable thermoplastic polyurethane and inorganic particles comprises providing a polymerized polyurethane and using a solvent-assisted mixing step. For example, first a solution of the dried polyurethane in a good solvent for the polymer like THF is made, followed by mixing with dried inorganic particles or with inorganic particles pre-dispersed in a liquid, preferably the same good solvent. In embodiments, a biocompatible dispersion agent may optionally be added to aid in homogeneously dispersing the inorganic particles. Depending on the concentration of polyurethane and the amount of particles in the mixture a liquid dispersion or a paste-like mixture may be obtained. In a subsequent step the solvent may be removed by known methods like evaporation, preferably at increased temperature and/or reduced pressure. The obtained solidified polymer composition can then be made into a form suitable for use in a shaping step like compression or injection molding, for example by cutting or grinding. Advantages of such solvent-assisted mixing method include relatively low shear forces and low temperature, that is a low risk of polymer degradation, and a relatively small scale at which it can be operated.

In further embodiments, the method of making the polymer composition comprises melt mixing of the components, also called compounding, at a temperature above the softening or melting point of the polyurethane; using known equipment such as a batch-type mixer or a continuous mixer like a single- or twin-screw extruder. Optionally, a biocompatible wetting or dispersion agent may be added before or during melt mixing to enhance dispersion of particles. Before melt mixing, polyurethane and particles are thoroughly dried to minimize hydrolytic degradation during melting and mixing, as indicated above. For similar reasons, the melt mixing equipment and mixing conditions are chosen such that the temperature of the composition is kept as low as possible. In embodiments, the polymer composition is made by mixing the dried components on a twin-screw extruder, applying conditions, like screw configuration, screw speed, throughput rate and temperature settings, which result in enough shear or torque for proper dispersion of the inorganic particles in polyurethane while minimizing over-heating and polymer chain scission or reduction of molar mass. In embodiments, temperature setting of the barrels of the extruder is at most 210 °C, preferably at about 205 or 200 °C. It was observed that melt mixing polyurethane with dried particles under such conditions resulted in better dispersion and significantly less polymer degradation than found for the same thermoplastic polyurethane with other mineral fillers like hydroxyapatite and bismuth oxide.

In embodiments, the TPU in the polymer composition from which a bone anchoring part of an orthopedic implant can be made has a mass average molar mass (or weight average molecular weight) Mw of at least 70 kDa. Molar mass and molar mass distribution are typically measured with a GPC method as described in the experimental part. Note that in present disclosure the ISO terms 'mass' and 'molar mass' are generally used rather than the still commonly used terms 'weight' and 'molecular weight'. It is found that a part made from the polymer composition as made by (melt) mixing the TPU with inorganic particles shows certain minimum desired properties, like a certain strength or elongation at break, if the TPU in the composition has such minimum molar mass. In preferred embodiments, the TPU in the composition has a molar mass Mw of at least 75, 80, 85, 90, 95 or 100 kDa. The molar mass Mw of the TPU that is used for making the composition also meets such minimum values, but is typically higher; yet preferably not so high that its melt viscosity would hamper processing and mixing with inorganic oxide particles; which also limits the molar mass of TPU in the composition as obtained. In embodiments, the TPU in the polymer composition made has a molar mass Mw of at most 400, 300, 250, or 200 kDa, to result in a balanced combination of processability and mechanical properties.

In embodiments, the polymer composition has an E-modulus of at least 800 MPa, preferably of at least 850 or 900 MPa, and of at most 3000, preferably at most 2500, 2000, 1800 or 1600 MPa as measured on dry-as-molded samples at 20 °C. Alternatively, the polymer composition is characterized by having an E-modulus of at least 200 or at least 225 MPa, and of at most 700, preferably at most 600, 550, 500 or 450 MPa, as measured on wet conditioned samples (in water at 37 °C), which better mimics biological conditions during its targeted use in an implant. Without wishing to be bound to any theory, the inventors reason that the bone anchoring part of an implant should mimic the mechanical properties, especially the stiffness or modulus, of the surrounding bone tissue for a more durable result. In this respect the inventors noted that a bone anchoring part of an implant will be mainly in contact with cancellous bone (also called trabecular or spongy bone), rather than with subchondral bone or cortical bone; which form a hard layer underneath cartilage and a hard outer layer of a bone, respectively. For example, if the anchoring part has a modulus below said levels, micromotions between the implant and surrounding bone may induce formation of a fibrous tissue interface, instead of desired direct bonding. If the implant part has too high a modulus, stress-shielding may occur; in which case a load on the implant, e.g. on a cartilage replacing cap, may be predominately propagated through the implant itself, without loading the surrounding bone tissue. When bone is not loaded, it may remodel and/or be resorbed in areas without loading; ultimately resulting in loosening of the implant. If the implant has too low stiffness, it may deform or be damaged upon being loaded. In addition, the present polymer composition shows reduced creep and plastic deformation, compared to less stiff materials like unfilled polyurethanes; which contributes to better stability of the implant.

In embodiments and analogously to the above paragraph, the polymer composition shows an elongation at break during tensile testing (Eab; dry/20 °C) of at least 5%, preferably of at least 10, 20, 30, 40 or 50%, or an Eab (wet/37 °C) of at least 10, 20, 30, 40 or 50%. In embodiments, the polymer composition has a tensile strength at break (TS; dry/20 °C) of at least 30, 35 or 40 MPa or of at least 15, 20 or 25 MPa after conditioning (wet/37 °C). Such stiffness and strength properties of the composition, which are in conditioned state of the same order of magnitude as those of cancellous bone, is found to enhance compatibility and bonding of an implant made from the composition with such living tissue overtime. It also eases or improves inserting the implant in a bone hole relative to a stiffer implant as made from metal, with lower risk damaging tissue. In addition, an implant made from the polymer composition is found to be sufficiently strong to withstand forces after, but also during implantation. For example, a typical implantation procedure as applied by an orthopedic surgeon may comprise inserting and press-fitting the implant into to a hole drilled in the bone at the defected cartilage site by hand, using a hammer and a directional guide that may also limit penetration depth, and typically responsive to his sensory perceptions (like noticing changes in sound during hammering).

In embodiments, the polymer composition has a Shore hardness of 76 to 85 ShD, typically of 78-82 ShD (dry/20 °C ).

In a further aspect, the invention relates to use of the polymer composition comprising a biostable thermoplastic polyurethane and 15-70 mass% of inorganic particles as described above, including all features, embodiments and combinations thereof, in an orthopedic implant and in making an orthopedic implant, especially in a bone anchoring part thereof. Examples of such use include implants formed with an injection molding process, especially such process comprising a step of molding the bone anchoring part from the composition.

In another aspect, the invention relates to a method of making an orthopedic implant or of making a bone anchoring part of an orthopedic implant, the method comprising forming the implant with an injection molding process comprising a step of molding the orthopedic implant or the bone anchoring part of an orthopedic implant from the polymer composition of the invention as defined herein above Such molding processes in general are known to a person of average skill in the art.

The use of the polymer composition and/or the method of making an orthopedic implant or a bone anchoring part of an implant, may concern a plug, screw or other part which can be used to connect or fixate a further implant part to bone, such as a suture, an artificial ligament or tendon, a meniscus, an acetabular labrum replacement device, or a cartilage replacement part. In embodiments, such further part mayform an integral part of the implant, like a bone anchoring part and a cartilage replacing part, or be detachably connected, like a suture.

In embodiments, the use and/or the method comprises making an implant comprising at least two parts, like a bone anchoring part and a cartilage replacing part. The cartilage replacing part is typically made from a resilient and abrasion resistant biocompatible material such as a segmented block-copolymer with hard segments based on a polyester, a polyamide or a polyurethane. In embodiments, the cartilage replacing part is made from a biostable, resilient thermoplastic polyurethane (TPU), preferably comprising hard and soft blocks that are chemically similar to the TPU of the polymer composition. In embodiments, the use and/or the method comprises making an implant wherein the cartilage replacement part is made from a biostable, resilient thermoplastic polyurethane of hardness 55-100 ShA. An advantage of using a TPU material for both the bone anchoring part and a further part of the implant is that the two parts may be injection molded to form an article having adherent, integrated parts; for example by applying an insert molding method or by a 2-component molding method.

In embodiments, the use and/or the method comprises making a bone anchoring part of an implant, which part substantially consists of the polymer composition. The bone anchoring part may have a smooth outer surface or a textured surface, and may optionally be provided with a surface coating; to for example influence interaction with body tissue.

In embodiments, the use and/or the method comprises making an orthopedic implant comprising a bone anchoring part and a cartilage replacing part, the method comprising forming the implant with a multi-component injection molding process comprising a step of injecting the polymer composition of the invention into a mold comprising an insert in the form of the cartilage replacing part to form the bone anchoring part, and subsequent steps of removing the insert from the mold, and of injecting a resilient and abrasion resistant biocompatible TPU material into the mold partly filled with the polymer composition to form the cartilage replacing part onto the bone anchoring part. Making implants by multi-component molding techniques from different polymer grades is known in the art. For example, WO2011/098473A1 describes making orthopedic implants, like meniscus or spinal disc implants, which have two or more distinct sections that each comprise a different, but chemically related, polymeric material; like different TPU grades.

In further embodiments, the use and/or the method comprises making a bone anchoring part that has a textured surface, such as a surface with surface roughness Ra of at least 1, 3 or 5 µm, in order to enhance interaction with surrounding bone tissue after implantation. Such surface roughness may be introduced during or after making the part from the composition. In embodiments, such part is made by applying a mold that has a certain surface texture; for example as defined by the VDI3400 scale, which is generally used in industry. For an example of a polymeric implant with a bone anchor having such textured surface and a method of making it, reference is hereby made to WO2019/068903A1. In further embodiments, the bone anchoring part of the implant has a surface roughness Ra of at least 6, 8, 10, 12, 14, 16, 18 or 20 µm and of at most 25 µm.

In other embodiments, the use and/or the method comprises a further step of providing the (smooth or textured) surface of the bone anchoring part of the implant with a surface coating; for example a bioactive coating to further promote interactions with tissue, preferably an osteoconductive coating. Various bioactive or osteoconductive coatings, based on both organic and inorganic bioactive material and as described in the art, may be applied on the bone anchoring part of the implant.

In further embodiments, the use and/or the method comprises providing bioactive ceramic particles at least at a part of the surface of the bone anchoring part made from the polymer composition, to induce osteoconductive properties to the part. A suitable method of providing the surface of the bone anchoring part molded from the polymer composition with a bioactive coating comprises a step of treating at least part of the surface with a dispersion of bioactive ceramic particles in a solvent for the polyurethane comprised in the polymer composition; as described in WO2019/068903A1.

Suitable bioactive ceramic particles include all inorganic materials that show the capability of direct bonding to living bone, for example by formation of biologically active bone-like apatite through interaction or chemical reaction of the particles with surrounding body fluid. Examples of suitable materials include various calcium phosphates, so-called bioglasses and other silica-based ceramics (silicated ceramics). Various types of calcium phosphates have been described for such application, like dicalcium phosphate anhydrate (CaHPO₄; DCPA), dicalcium phosphate dihydrate (CaHPO₄.2H₂O; DCPD), octacalcium phosphate (Ca₈(HPO₄)₂.5H₂O; OCP), tricalcium phosphate (Ca₃(PO₄)₂; TCP), and hydroxyapatite (Ca₁₀(PO₄)₆(OH)₂; HA). Also blends of different types may be applied, or even show advantages; like mixtures of HA and TCP or of HA and bioglass. The ceramic particles may in addition to their main constituents comprise small or trace amounts of other (inorganic) elements or ions, like Si, Na, Mg, Fe, Zn, Ti, Ag, Cu or -SO₄, or -CO₃, which may improve specific properties of the particles.

The term bioglass, including commercial Bioglass^{®} products, refers to mixed inorganic oxides or silicated ceramics that have a surface-reactive glass film compatible with tissues; and may be used as a surface coating in medical and dental implants. The Bioglass^{®} 45S5 grade, for example, is indicated to be a glass composed of 45 mass% SiO₂, 24.5 mass% CaO, 24.5 mass% Na₂O, and 6.0 mass% P₂O₅. The high ratio of calcium to phosphorus in this material would promote formation of apatite crystals; calcium and silica ions can act as crystallization nuclei. Glasses are non-crystalline amorphous solids that are commonly composed of silica-based materials with minor amounts of other inorganic elements.

The bioactive ceramic particles have a particle size in the range 0.1 - 5 µm. Particle size and size distribution can be measured with SEM or optical microscopy, or with (laser) light diffraction techniques. Within present disclosure the D₅₀ value, e.g. as measured with light diffraction according to ISO 13320:2009 with a Malvern Mastersizer 2000, is defined as the particle size of the bioceramic particles. The particle size does not appear to be specifically critical, but larger particles may be more effective in interacting with body fluid and cells. In view of handleability, ceramic particles having a size of at least 200 nm, or at least 300, 400, or 500 nm are preferred. In further embodiments, the implant has ceramic particles having size of at most 10, 8, 6, 5, 4, 3, 2 µm, or at most 1 µm at the surface of the bone anchoring part.

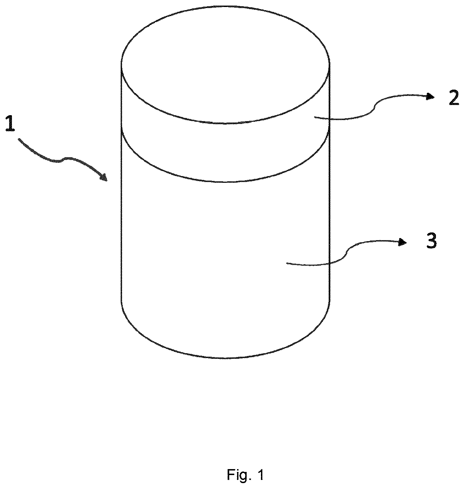

In embodiments, the use of the polymer composition and/or the method of making an orthopedic implant comprising a bone anchoring part and a cartilage replacing part, may concern an implant of various forms or shapes as proposed in the art, like an implant having substantial axial symmetry, or an implant having at least a part with substantial axial symmetry. In an exemplary, relatively simple embodiment, as schematically shown by the simplified drawing in Figure 1 representing an angled top-view, an implant 1 is of cylindrical shape with a substantially constant diameter, wherein a larger section 3 of the cylinder represents the bone anchoring part and the cartilage replacing part is a section (or layer) 2 at one end of the cylinder. The diameter of the cylinder may be 5-20 mm, 10-18 mm, 12-17 mm, or typically about 15 mm. Alternatively, the substantially cylindrical form may show some tapering, with the cartilage replacing part or layer having a diameter of at most 10% larger than the smallest diameter of the bone anchoring part. A slightly tapered bone anchoring part is found to be advantageous in releasing the part from a mold wherein it is made, but also in placing in a bone hole and in securing contact with bone upon implantation. Relative to the lengthwise orientation of the anchoring part, the outside may show a tapering of 1-5°, preferably of at least 1.5, or 2.0° and at most 4.5, 4.0, 3.5 or 3.0°. The cartilage replacing part, or at least the top surface thereof, may be substantially flat, or be curved or contoured to mimic the curvature of the articulating joint wherein it is to be implanted. In embodiments, the cartilage replacing part of an orthopedic implant for cartilage replacement is of substantially constant or uniform thickness, which thickness is preferably in the same range as the cartilage it will replace; for example a layer of material on the bone anchoring part, which part also functions as support for the resilient layer.

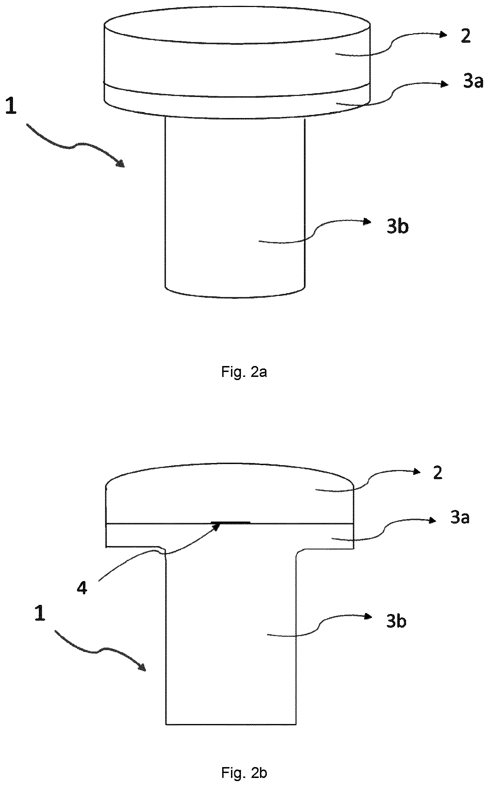

In other embodiments, implant 1 may have basic axial symmetry, and have a mushroom-like shape with a cap and a stem that have different diameters. The simplified drawings shown in Figures 2A and 2B schematically represent an angled top-view and a cross-sectional side view of such mushroom-like implant. The stem 3b is cylindrical with a substantially constant diameter or with a slight tapering, and forms together with a lower section 3a of the cap the bone anchoring part 3. Relative to its lengthwise orientation, the outside of the stem may show a tapering of 1-5° as described above; wherein the diameter of the stem decreases slightly from cap to bottom end. Both sections 3a and 3b forming the bone anchoring part 3 are made from the same polymer composition, which is described in this disclosure. The top section (or layer) 2 of the cap represents the cartilage replacing part, for example made from resilient TPU of hardness 55-100 ShA. The diameter of the stem may be about 5-15 mm, typically about 6-10 mm; and the cap may have a diameter of about 5-25, 10-20, 12-18, or about 15 mm. In practice, typically a series of implants with different sizes (especially of the cap) may be made for example as part of a kit; allowing selection of a suitable implant depending on the patient that is to be treated . The cartilage replacing part 2, or at least the top surface thereof, may be curved or contoured in one or more directions to mimic curvature of the articulating joint wherein it may be implanted. In embodiments, the cartilage replacing part of such orthopedic implant for cartilage replacement is a layer of substantially constant thickness, which thickness is preferably in the same range as the cartilage layer it will replace. The underside of the cap 3a, forming a section of the bone anchoring part, is basically flat; preferably with rounded edges and rounded transition to the stem. Similarly, the bottom edges of the stem are rounded (not shown in the simplified drawings in Fig. 2). In general, sharp edges and transitions are omitted to reduce stress concentrations. Upon implanting, a bone hole will be made of a diameter that is the same as, or slightly smaller than that of the stem 3b of the plug, whereas damaged cartilage will be removed with such diameter and depth that bone tissue is exposed, preferably such that the side and underside of section 3a will contact the patient's bone tissue upon insertion; likewise the surface of the stem 3b will contact cancellous bone. The cartilage replacing part 2 would then preferably only contact natural cartilage at its side (and cartilage surface of the opposing bone in the joint with the top surface of part 2).

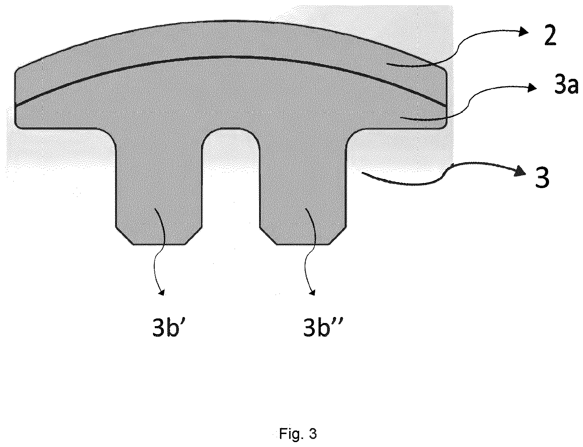

In other embodiments, the use of the polymer composition and/or the method of making an orthopedic implant relates to an implant that has no axial symmetry as a whole, but can for example be thought to comprise two similar mushroom-like implant parts with axial symmetry, similar to the part discussed above, which have partly fused together; like Siamese twins. An example of such an implant containing a substantially oval or elliptical cap with contoured top surface and two substantially identical, cylindrical or tapered stems, is schematically shown in Figure 3. Herein the contoured top layer 2 of the cap, having a substantially uniform thickness, forms the cartilage replacing part and the underside of the cap 3a and the two stems 3b' and 3b" together form the bone anchoring part 3.

In further embodiments, the use and/or the method may further comprise a step of including an orientation marker within the implant, such as at the interface of bone anchoring part and cartilage replacing part. For example, a marker may include a recessed or protruding line or pointer at the top surface of the bone anchoring part during molding, or by placing a small elongated object in the mold between the steps of injecting the polymer composition to form the bone anchoring part and of injecting the biocompatible material forming the cartilage replacing part into the mold. Such marker may be visible through a transparent or translucent cartilage replacing part, which may be the case if made from an unfilled TPU; which enables placing an implant that has no full axial symmetry with a desired orientation at the implant site. The orientation marker may be radiopaque, to also allow visualizing orientation of the plug during and after implantation. For example, in case of an implant with a cartilage replacing part having a surface with more than one contour radius to better match a bone curvature, the orthopedic implant may further contain a relatively small radiopaque, elongated marker, like a small length of thin metal wire or strip, or an array of small marker particles. Such radiopaque orientation marker can for example have a length of about 2-6 mm, like a piece of tantalum wire. In embodiments, such orientation marker is present in the region between the bone anchoring part and the cartilage replacing part. Such orientation marker is represented as line 4 in Fig. 2b. A surgeon can thus place the plug in a desired orientation using his eyes and/or medical imaging; and may also post-operative check its position and any potential change therein using a medical imaging technique.

In a further aspect, the invention relates to an orthopedic implant comprising a bone anchoring part, which part comprises the polymer composition of the invention as described herein above including all features, embodiments and combinations thereof, and which implant has been obtained by the method of the invention as described herein above.

The use of the terms "a" and "an" and "the" and similar referents in the context of describing the invention (especially in the context of the following claims) are to be construed to cover both the singular and the plural, unless otherwise indicated herein or clearly contradicted by context.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein.

The experiments and samples below further elucidate embodiments of the invention.

### Experimental part

### Methods

### Molar mass

Molar masses and molar mass distribution of samples were measured by GPC (Gel Permeation Chromatography, also referred to as Size Exclusion Chromatography or SEC) as described in ASTM D5296-11, on a Viscotek GPCMax VE2001 system equipped with a TDA302 triple detector array and 3 Phenogel^{™} columns (10 µm 10E6A, 10 µm 10E4A, and 10 µm 100A). Detectors and columns were operated at 80°C. Polymer samples were dissolved at concentration of 1.0 mg/ml in DMF containing 0.05 mass% LiBr and 300 mg/l of DHT, at 70°C for at most 4 hours and filtered via 0.2 µm PTFE membrane. This solvent composition was also used as eluent. Molar mass calculations were based on a calibration curve, which was obtained with EasyCal polystyrene standards and adjusted for results with a polyurethane sample of known molar mass.

### Hardness

Hardness of molded samples was measured using a Zwick Shore Durometer 3131 following ISO 868 (average of 5 tests, measurement time 15 s, at 20.9 °C / 51.1 %RH).

### Tensile properties

Tensile modulus, (ultimate) tensile strength and elongation at break, and were measured on a Zwick Z010 universal tensile testing apparatus, equipped 2.5 kN pneumatic grips and a temperature chamber, with a method based on ISO 527. Injection molded test bars (ISO 527 type 1BA) were tested dry-as-molded at 20 °C and at 37 °C after conditioning in water of 37 °C,. Samples used for dry-as-molded measurements were dried overnight using an 80 °C vacuum oven with a small N₂ flow and stored in a closed box with silica gel Samples were conditioned by submersing samples in water kept at 37 °C and measuring mass increase every 24 h, until less than 0.1 mass% change (typically at least 360 h). Each sample was stored at said conditions until shortly before placing it in the temperature chamber of the tensile tester. Directly before testing, the width and thickness of the samples were measured at the center of the specimens. The sample was placed in the grips with a grip-to-grip separation of 54 mm at the start position. A pre-load of 0.5 N was applied before starting the tensile experiments. Modulus of a sample was determined within the first 0.05 and 0.25 % of strain, at a speed of 1 mm/min. Afterwards, the stress and strain measurement was done at 50 mm/min until the sample fractured, elongation until 60% strain was measured with an extensometer.

### Particle size

Particle size distribution and particle size (D₁₀, D₅₀ and D₉₀) were measured on samples dispersed in water with a Malvern Mastersizer 2000, according to ISO 13320:2009.

### Crystallization behavior

Differential scanning calorimetry (DSC) was performed using a standard heat flux DSC of Mettler Toledo. Samples of about 5 mg mass are cut from pellets, weighed with a precision balance and encapsulated in (crimped) aluminum pans of known mass. An identical empty pan is used as a reference. Nitrogen is purged at a rate of 50 ml/min. Heating-Cooling-Heating cycles were applied for determining the parameters that numerically characterize the thermal behavior of the investigated materials. The applied temperature program was: [1] 0.0-70.0 °C, 10.00 K/min; [2] 70.0 °C, 60.00 min; [3] 70.0-90.0 °C, -10.00 K/min; [4] -90.0 °C, 10.00 min; [5] -90.0-240.0 °C, 10.00 K/min; [6] 240.0 °C, 2.00 min; [7] 240.0-90.0 °C, -10.00 K/min; [8] -90.0 °C, 10.00 min; [9] -90.0-240.0 °C, 10.00 K/min.

### Polymer compositions

### Experiments 1 - 3.

In the experiments a polycarbonate urethane based on MDI, butanediol and poly(hexamethylene carbonate)diol, having a hardness of 75 ShD and a mass average molar mass Mw of 388 kDa was used, after having been dried during 24 h at 80 °C to a moisture content of 113 ppm. Hydroxyapatite of particle size 5 µm (Merck, Hydroxyapatite for Bioceramics) was dried for 24 h at 120 °C to reach a level of about 2650 ppm of moisture.

The polyurethane and filler components were melt-mixed on a Coperion ZSK Mc¹⁸ twin-screw extruder, equipped with 2 Colortronic LabLine feeders and having a die-plate with 1 opening of 3 mm. Polyurethane granules were dosed on the intake barrel and HA powder was dosed on the intake side-feeder to barrel 2, at a mass ratio of TPU/HA of 80/20. Temperature setting of all zones was 190 °C. The screws rotated at 150-200 rpm with a throughput of about 2.5 kg/h, torque level varied somewhat within the range 50-70%. Extrusion conditions were selected to result in a melt temperature of at most about 200 °C; to enable stable compounding resulting in a smooth and regular strand. The extruded strand was cooled in a water bath with 2 m total cooling length, and then cut into pellets using a motorized strand pick-up and Scheer 50E pelletizer (operated at slow speed).

The extruder was rinsed before and after a mixing experiment with the polyurethane during 5-10 min at 2 kg/h throughput.

The obtained pellets were injection molded into test bars on an Xplore IM12 micro injection moulder, after drying the pellets under vacuum/N₂ at 120 °C during 24 h. Barrel temperature was set at 200 °C and mold temperature at 100 °C. After a melting time of at least 5 min., the material was injection into the vented mold at an injection pressure of 10 bar during 2.2 s and packing pressure 10 bar during 10 s.

Tensile properties were determined on dry-as-molded specimen at room temperature (20 °C) as well as at 37 °C in wet state to mimic conditions when used as implant material.

In Table 1 results are summarized as (comparative) Exp. 2. Also presented in this table are molar mass data (Mw) as determined on pellets and molded test specimen.

Experiment 1 concerns results of reference tests that were performed on the unfilled polyurethane pellets, which were injection molded and tested analogously to the above experiment 2 , be it that a molding temperature of 235 °C and pressure of 15 bar was applied.

Experiment 3 was performed analogously to Exp. 2, but the amount of HA dosed to the extruder was 40 mass%.
The tensile measurement results as summarized in Table 1 suggest that hydroxyapatite particles act as a non-reinforcing filler in the polyurethane; the dry modulus is not significantly altered, the tensile strength and elongation are markedly decreased, but water up-take is reduced and has less effect on properties (20 °C/dry vs 37 °C/wet). Shore hardness of the molded bars increased from 75.7 ShD (Exp. 1) to 80.2 ShD (for Exp. 2). The GPC results indicate a significant lowering in molar mass when compared to the unfilled material, which is likely caused by residual moisture contained in the crystalline HA particles inducing degradation of the polymer during melt processing steps; predominantly during the compounding step. The observation that during compounding the melt temperature should be kept below 200 °C, because otherwise no stable strand extrusion was possible, would support such explanation.

### Experiments 4.

Analogously to the compounding procedure of experiments 2 and 3, bismuth oxide particles (Bi₂O₃) of particle size 4 µm (D₅₀; 5N Plus Product Data Sheet (Helos/Rodos), dried at 120 °C during 24 h to a moisture content of 153 ppm, were used instead of HA. Various variations in processing conditions were tried, but experiments were stopped when no stable processing appeared possible, and/or foaming and discoloration of the extrudate was observed. This likely is caused by excess degradation of the polyurethane. No further experiments were done with this material.

### Experiments 5 - 6.

In these experiments, zirconium oxide TZ-0 (Tosoh Europe BV)), a free-flowing powder with primary particle size of 0.04 µm (according to Tosoh brochure), was added as filler to the polyurethane during compounding. Samples were dried at 120 °C during 24 h and compounded with the same 75 ShD polyurethane applying the procedure of experiments 2 and 3. By setting the temperature of the barrels at 200 °C and increasing screw speed to 300 rpm, strand breaking during compounding was prevented and particle dispersion appeared to be improved. Torque level was limited to 60-70%, and melt temperature at most 212 °C. Dosing behavior of the powder was very good, but thick-thin variations as observed in the extruded strand suggest the particles were not well dispersed.

Addition of these zirconia particles at 20 and 40 mass% loading results in a decrease in strength; at 40 mass% loading the composition is even rather brittle. This is likely caused by insufficient dispersion of the agglomerated primary particles in the polyurethane matrix. A pretreatment of the particles and/or addition of a dispersion agent may be applied to enhance dispersibility; and to improve mechanical properties.

### Experiments 7 - 8.

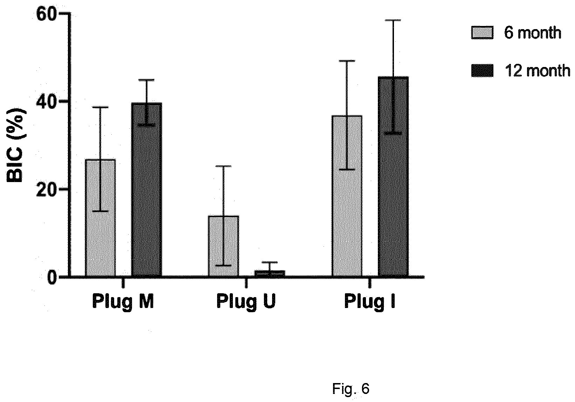

Applying the same conditions and procedure as in Exp. 5-6, compositions of 75 ShD polyurethane with zirconium oxide TZ-Y3-E (Tosoh) were made. This zirconia grade TZ-Y3 contains 3 mol% of yttrium and is also marketed as a free-flowing powder with (primary) particle size of 0.04 µm. Processing was similar as observed for TZ-0 powder. As with the pure zirconia grade, the polyurethane compositions tended to show brittle failure during tensile testing, especially at 60 mass% loading. The particle size distributions of the TZ-0 and TZ-Y3 grades as determined and shown in Figure 6, confirm that the actual particles are much larger than their primary particles; with maxima at about 60 and 50 µm, respectively, and a smaller maximum around 1 µm. This again suggests that, if these particles would be pretreated and/or (partly) deagglomerated before mixing with polymer, and/or a dispersing aid would be added during mixing, the observed processing and brittleness issues can be overcome. Also applying mixing equipment that allows higher forces than the small lab-scale apparatus used may enhance dispersion.

### Experiments 9 - 11.

In these examples a medical grade zirconium oxide obtained from Sigma Aldrich (designated herein as ZrO/SA) was used, after having been dried at 120 °C during 24 h. These particles were found to have particle size D₅₀ of about 1.8 µm; which is much smaller than found for the particles used in above experiments 5-8, as shown by Figure 6. Compounding was done analogously, but some additional mixing elements were used in the feeder to ensure proper dosing of the dried, somewhat sticky powder. Polymer strands and granules were made in a stable process. The compositions made showed an increase in tensile modulus with zirconia loading (20, 40 and 60 mass%), but a decrease in tensile strength and elongation. All samples show a tensile properties profile (also in conditioned state) that would be suitable for use of the compositions in making a bone anchor. Addition of zirconia increased hardness from 75.7 ShD (Exp. 1) to 81.1 and 80.2 ShD (examples 10 and 11)

GPC measurements indicate a lowering of molar mass upon melt processing, especially during compounding; but these reductions appear to be significantly less than as observed for compositions comprising HA particles. The unfilled polyurethane shows higher molar mass after injection molding; but this material has not been subjected to a preceding compounding step.

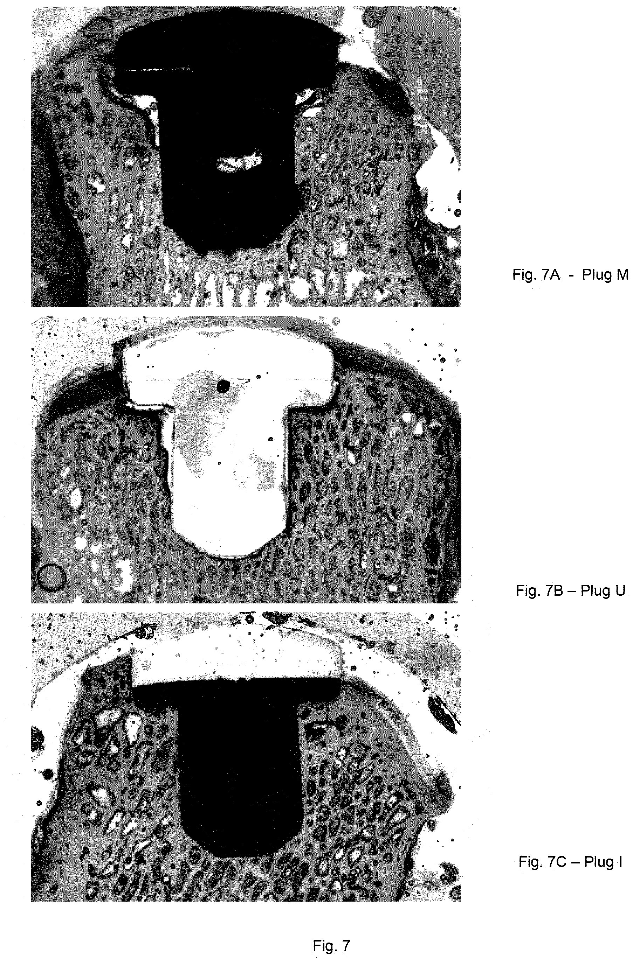

Crystallization behavior of selected samples was investigated with conventional DSC; relevant results (temperatures and enthalpies (J/gram sample)) are summarized in Table 2 and DSC curves for experiments 1 and 9-10-11 are shown in Figure 7. For the composition TPU/HA 80/20 (exp. 2) crystallization appears to start during cooling at higher temperature than for the reference polyurethane, which may be related to low molar mass of degraded polyurethane and/or to some nucleation effect of hydroxyapatite particles. On the other hand, broadening of crystallization and melting peaks, specifically seen for higher amounts of filler particles, would point to hindering of polymer crystallization (lower rate). The compositions comprising zirconia particles show a nucleation effect in cooling, and higher melting temperatures in reheating scans.

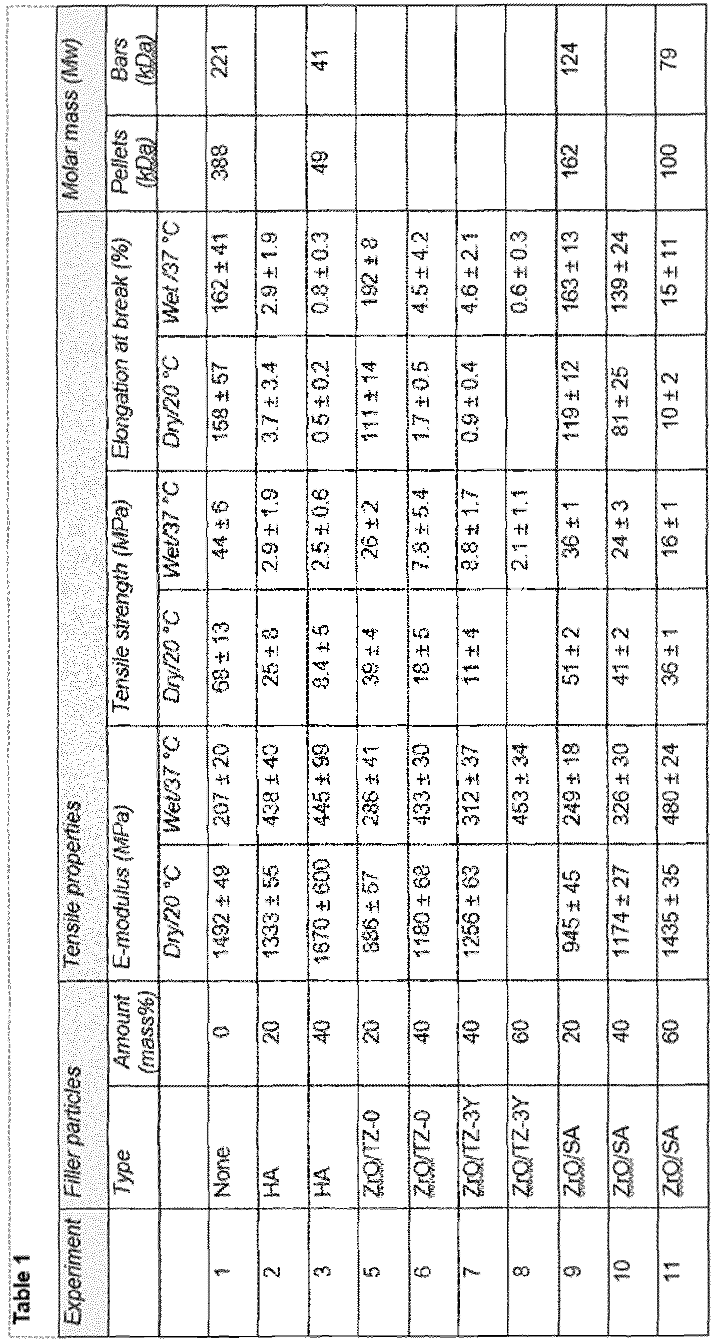

**Table 2**

| *Experiment* | *Filler particles* | | *Thermal transitions observed in DSC curves* | | | | | |
|---|---|---|---|---|---|---|---|---|
| | *Type* | *Amount (mass%)* | *1^{rst} heating* | | *Cooling* | | *2^{nd} heating* | |
| | | | *°C* | *J*/*g* | *°C* | *J*/*g* | *°C* | *J*/*g* |
| 1 | None | 0 | 181 | 24 | 108 | -18 | 182 | 18 |
| | | | | | | | 204 | - |
| 2 | HA | 20 | 200 | 21 | 209 | -2 | 184 | 16 |
| | | | 216 | 1 | 148 | -16 | | |
| 6 | ZrO/TZ-0 | 40 | 177 | - | 151 | -17 | 199 | 16 |
| | | | 201 | 17 | | | | |
| | | | 216 | 1 | | | | |
| 7 | ZrO/TZ-3Y | 40 | 174 | - | 140 | -17 | 192 | 18 |
| | | | 200 | 24 | | | | |
| | | | 217 | 2 | | | | |
| 9 | ZrO/SA | 20 | 183 | - | 146 | -24 | 199 | - |
| | | | 191 | - | | | 215 | 21 |
| | | | 205 | 22 | | | | |
| 10 | ZrO/SA | 40 | 180 | - | 151 | -16 | 195 | - |
| | | | 189 | - | | | 209 | 16 |
| | | | 203 | 17 | | | | |
| 11 | ZrO/SA | 60 | 178 | - | 155 | -10 | 154 | - |
| | | | 201 | 15 | | | 193 | 10 |
| | | | 218 | 1 | | | | |

### Cartilage plugs

Prototypes cartilage plugs having a mushroom-type shape as shown in Fig. 2A-B were made on a bench-top Xplore IM12 micro injection moulder, using a mold holder part containing a 2-part mold and applying a set of inserts to enable 2-component molding.

Materials used were the TPU composition comprising 60 mass% zirconia (Exp. 11) and an unfilled, end-group modified polycarbonate urethane of hardness 80 ShA (Bionate^{®} II 80A; DSM Biomedical BV, Sittard-Geleen, NL). Materials were dried before use during 24 h at 120 °C or during 72 h at 80 °C, respectively, under vacuum/nitrogen flush.

The different mold parts together define an implant part with following basic dimensions: a stem section with length 6.5 mm, diameter 6.1 mm, and bottom end rounded at 45° angle; a cap section with diameter 10.1 mm, top surface contoured with two radii of 11 and 18 mm rectangular to each other, with a total cap height of 3.5 mm of which the lower 1.0 mm connecting to the stem to be made from the rigid polymer composition. All further edges were rounded with a radius of 0.5 mm. The surface of the mold parts defining the stem section was etched to result in a texture with roughness VDI3400 36.

In a first step the polyurethane/zirconia composition was injected into the mold that comprised an insert in the cap section, applying a barrel temperature of 210 °C, a mold temperature of 80 °C, injection pressure 10 bar during 2.2 s, and packing pressure of 10 bar during 10 s. Then the insert was removed from the mold, and a tantalum wire of 4 mm length, which was pre-heated on a hot plate set at 250 °C, was placed in the mold on the injected surface, oriented with the 18 mm radius of the cap. Subsequently, the resilient polyurethane material was injected to the partly filled mold applying a barrel temperature of 235 °C, a mold temperature of 80 °C, injection pressure of 12 bar during 2.2 s, and packing pressure of 12 bar during 10 s to form the top section of the cap.

The molded plugs were functionalized with bioceramic particles by coating the stem and underside of the cap with a dispersion of BCP particles (biphasic calcium phosphate; Cam BioCeramics) in THF; air drying the sample, multiple rinsing with ethanol and drying (50 °C under reduced pressure). These plugs according to the present invention are designated as Plugs I).

Analogously to the above procedure, plugs were molded from corresponding unfilled materials, that is the stem section from a polycarbonate urethane of 75 ShD hardness (Bionate^{®} 75D; DSM Biomedical BV, Sittard-Geleen NL) and the cap section from the Bionate^{®} II 80A material. These unfilled plugs are hereinafter referred to as Plugs U.

In addition, metal plugs with geometry and dimensions corresponding to the polymeric plugs were made, wherein the stem part consists of titanium, the cap part is made from Cobalt-chromium, and stem was post-treated by corundum-blasting (designated as Plugs M).

### In vivo tests

The above-described 3 types of plugs were evaluated in an animal study, by implanting devices in the knees of 32 female Dutch milk goats. The study was approved by the local and national Animal Ethical Committee under project license PV2015-018-003.

The animal's knees (32x2) were divided in 4 groups, of which 3 were implanted with each 16 Plugs I, U and M; and the remaining group was sham-operated (placebo operated, without placing a plug) as a reference for natural cartilage degeneration.

The surgical procedure included making a medial parapatellar skin incision, opening the joint capsule to expose the medial femoral condyle, and locating the center of the weight bearing part thereof. For implanting a plug, an osteochondral defect was created using a cannulated drill under K-wire guidance. Depth of the drilled hole was controlled such that implants would be flush or somewhat recessed to the adjacent cartilage. Plugs were then inserted using press-fit fixation, while aligning the double curvature of the cap (using the orientational marker) to correspond with the knee morphology. No intraoperative or postoperative complications occurred.

After a 26-week (6 months) period at the facility for experimental animal testing of Maastricht University 4 animals of each group were euthanized with an overdose of pentobarbital (200 mg/kg bodymass). The knees were excised and subsequently dissected. The medial femoral condyles and tibia plateaus were isolated and fixed in neutral buffered formalin. Fixed specimens were dehydrated by incubation in increasing concentrations of ethanol in water, up to 100% ethanol. Medial femoral condyles were embedded in a hydroxyethyl methacrylate-based resin (Technovit 8100, Hereaus Kulzer, Hanua, DE) under vacuum. A polymethyl methacrylate (PMMA, Technovit 3040, Hereaus Kulzer, Hanua, DE) mantle was subsequently created for each block to prevent swelling. Plastic blocks then were cut using a band saw to orient the implants horizontally, and blocks were mounted in a diamond saw (SP1600, Leica Biosystems, Nussloch, DE) using ultra-low viscosity cyanoacrylate glue. A cut through the middle of the implant was made. Safranin-O/Fast-Green (Carl Roth, Karlsruhe, DE) staining was applied. Tissues were gently wiped dry and allowed to air dry for five to ten minutes. A glass coverslip was glued to the tissue using cyanoacrylate glue. Sections of 50-70 µm were cut and glued to a glass slide with cyanoacrylate glue. The sections were scanned using bright light microscopy at a magnification of 200x (M8 Microscope, Precipoint, Freising, DE). A custom written MATLAB script (MathWorks, Natick MA, US) was used to determine the bone-implant-contact (BIC), defined as the percentage of the implant surface that is in direct contact with bone. The remaining animals were euthanized after 12 months, and the knees and implants were evaluated using the procedures as described above. Results of BIC scoring of the implants after 6 and 12 months, expressed as averaged numeric score (%), are shown in Figure 6. It may be observed that the Plugs I, having a stem made from zirconia-TPU composite material and provided with BCP particles on the surface, showed the highest average BIC score; indicative of better bone-to-implant contact or in vivo osteointegration of the plug than observed for plugs M and U. It was noted that one plug M and plug I showed hardly any bone contacting after 6 m; which appeared to be caused by misalignment or tilting of the metal plug, and cracking initiated e.g. at air inclusions in the plug based on the filled polymer composition. 4 out of 8 of the implants wholly made from unfilled polyurethane had a very low BIC score, likely caused by deformations of the relatively soft plug.

After 12 months of implantation, 1 of 8 plugs M, 4 of 8 plugs I, and 8 of 8 plugs U had a BIC score of (nearly) 0 %. Again the unfilled plugs appear to lack sufficient stiffness, and in case of metal and composite plugs this appears to origin from defects caused by the small scale compounding and/or molding processes that were used or by the method of plug insertion during operation; rather than from actual performance of a properly made and placed plug. The other plugs M and I both performed well, showing an increase in bone bonding relative to 6 months in the photographs. For the metal plugs this was not unexpected, as it is known that initially such plug will show relatively slow bonding to bone, but after several years the so-called stress shielding effect generally causes debonding. If the erroneous results are disregarded, the average BIC scores after 12 m. are 40 and 46 %, for plugs M and I respectively. It is anticipated that if the production of the polymer composition and of composite plugs is up-scaled and improved, and implantation of plugs is better controlled, the observed defects and negative results may be reduced or prevented.

The above is further illustrated by representative photos of histological slices as shown in Figure 7 for each of the plug types (after 6 months, and using transmitting light). It is noted that these photos are grayscale versions of the original color photos. Nevertheless, it can be unambiguously concluded that the plug I shows close fitting to surrounding tissue, without voids or other irregularities at the interface or in the tissue. Note also the clearly visible distinction between the top cartilage replacing part and the bone anchoring part of the TPU-based plugs, and presence of a tantalum orientation marker (shown as a dark dot, being oriented perpendicular to the slice) at the interface of both parts.

It was further noted that MRI images taken of knees with implants after 6 m of implantation showed no substantial difference between Plugs I and U, although images of Plugs I showed better contrast between plug and tissue. Both plugs appeared not to interfere with MRI assessment of the cartilage in the joint, whereas MRI imaging of metal plug M and adjacent cartilage was not feasible due to artefacts caused by the metal parts. The stem part of Plugs I, like Plugs M, were also well visible on X-ray photographs, but Plugs U were only partly and faintly visible.

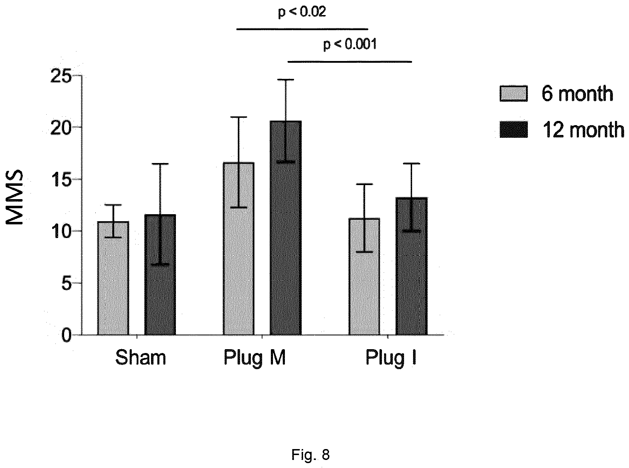

After fixation and dehydration of the tibia plateaus, 3-4 mm thick coronal osteochondral slabs were cut from the tibia plateau using a band saw; after 6 and 12 month periods. Individual slabs were then decalcified in formic acid at room temperature during at least six weeks. Specimen were subsequently embedded in paraffin, and 5 µm thick sections were cut using a standard microtome (Leica RM2245, Leica Biosystems, Nussloch, DE). Slices were stained with Safranin-O/Fast-Green (Carl Roth, Karlsruhe, DE) and subsequently digitized using a bright light microscopy slide scanner at a magnification of 200x (M8 Microscope, Precipoint, Freising, DE). Finally, scoring of tibia cartilage quality was performed using the Modified Mankin scoring (MMS) system, as described by Little et al. (DOI: 10.1016/j.joca.2010.04.016). In Figure 8 the results of numerically scoring cartilage damage or degeneration on the opposing bone surface is summarized. In these cases, the metal implants were found to have caused substantially more severe cartilage damage than the TPU-based plugs and the sham-operated group. Plugs I, having a zirconia-filled polyurethane stem and a cartilage contacting part of unfilled polyurethane, were found to perform similarly to the sham-operated goats, that is to goats having only natural cartilage in their knee joint. Plugs U scored similarly as plugs I, the soft polyurethane not having caused damage; but are not shown in figure 8.

In summary, the cartilage plugs having a stem made from a zirconia/TPU composition and a cartilage replacing cap made from unreinforced TPU (Plugs I) showed best overall performance; with proper handleability and implantability, showing good osseointegration, causing little damage on the opposing cartilage surface, and being imageable as an implant with microCT, X-ray and MRI techniques. In addition, in this disclosure also several options are described to further improve the properties of filled TPU compositions, and thus the performance of implants made therewith.

## Claims

1. A polymer composition comprising a biocompatible, biostable, thermoplastic polyurethane (TPU) and 15-70 mass% of biocompatible inorganic particles comprising a transition metal compound, wherein the inorganic particles have a particle size (D₅₀) in the range 0.1-5 µm, as measured according to the description.

2. The polymer composition according to claim 1, wherein the TPU has a Shore hardness of 40-90 ShD, preferably of 60-85 ShD.

3. The polymer composition according to claim 1 or 2, wherein the TPU comprises an aliphatic polyether, an aliphatic polyester, an aliphatic polycarbonate or a combination thereof in soft blocks, preferably the TPU comprises an aliphatic polycarbonate, like poly(hexamethylene carbonate).

4. The polymer composition according to any one of claims 1-3, wherein the TPU is a blend of two biocompatible, biostable TPU grades differing at least in hardness, preferably a blend of a TPU with hardness 50-80 ShA and a TPU with hardness 70-85 ShD.

5. The polymer composition according to any one of claims 1-4, wherein the TPU further comprises 0.01-5 mass%, based on the amount of the polyurethane, of one or more biocompatible additives.

6. The polymer composition according to any one of claims 1-5, wherein the inorganic particles comprise a transition metal oxide, preferably an oxide of at least one of Ti, Zn, Y, Zr, La, Yb, Hf and Ta.

7. The polymer composition according to any one of claims 1-6, wherein the inorganic particles comprise zirconia, preferably the particles consist of zirconia.

8. The polymer composition according to any one of claims 1-7, wherein the composition contains at least 20, 25, 30, or 35 mass% and at most 66, 62, 58, 54 or 50 mass% of the inorganic particles.

9. The polymer composition according to any one of claims 1-7, wherein the polymer composition consists of a) 30-65 mass% of a biostable thermoplastic polyurethane, b) 35-70 mass% of inorganic particles, and c) 0-10 mass% of other compounds, with the sum of a) - c) being 100 mass%.

10. The polymer composition according to any one of claims 1-9, wherein the TPU has a mass average molar mass (Mw) of 70-400 kDa, preferably Mw is 80-250 kDa, as measured with GPC based on ASTM D5296-11.

11. The polymer composition according to any one of claims 1-10, having an E-modulus of 800-2000 MPa, preferably of 900-1800 MPa, as measured on dry-as-molded samples at 20 °C (based on ISO 527).

12. The polymer composition according to any one of claims 1-11, having an E-modulus of 200-700 MPa, preferably of 225-500 MPa, as measured on samples conditioned in water at 37 °C (based on ISO 527).

13. The polymer composition according to any one of claims 1-12, having an elongation at break of at least 5%, preferably of at least 10%, as measured on dry-as-molded samples at 20 °C (based on ISO 527).

14. A method of making the polymer composition according to any one of claims 1-13, comprising steps of
• Drying the polyurethane and the inorganic particles to a moisture level of at most 250 ppm; and
• Melt mixing the dried polyurethane and the dried particles in a twin-screw extruder, with temperature setting of the barrels of the extruder being at most 210 °C.

15. A method of making an orthopedic implant or of making a bone anchoring part of an orthopedic implant, like a plug or a screw, comprising a step of injection molding the implant or the bone anchoring part from the polymer composition according to any one of claims 1-13.

## Patentansprüche

1. Polymerzusammensetzung, die ein bioverträgliches, biostabiles thermoplastisches Polyurethan (TPU) und 15-70 Masse-% bioverträgliche anorganische Partikel umfasst, die eine Übergangsmetallverbindung umfassen, wobei die anorganischen Partikel eine gemäß der Beschreibung gemessene Partikelgröße (D₅₀) im Bereich von 0,1-5 µm aufweisen.

2. Polymerzusammensetzung nach Anspruch 1, wobei das TPU eine Shore-Härte von 40-90 ShD, vorzugsweise von 60-85 ShD, aufweist.

3. Polymerzusammensetzung nach Anspruch 1 oder 2, wobei das TPU einen aliphatischen Polyether, ein aliphatisches Polyester, ein aliphatisches Polycarbonat oder eine Kombination davon in weichen Blöcken, umfasst, wobei das TPU vorzugsweise ein aliphatisches Polycarbonat, wie Poly(hexamethylencarbonat), umfasst.

4. Polymerzusammensetzung nach einem der Ansprüche 1-3, wobei das TPU ein Blend von zwei bioverträglichen, biostabilen TPU-Sorten, die sich zumindest in Bezug auf die Härte unterscheiden, vorzugsweise ein Blend eines TPU mit einer Härte von 50-80 ShA und eines TPU mit einer Härte von 70-85 ShD, ist.

5. Polymerzusammensetzung nach einem der Ansprüche 1-4, wobei das TPU weiterhin 0,01-5 Masse-%, bezogen auf die Menge des Polyurethans, eines oder mehrerer bioverträglicher Additive umfasst.

6. Polymerzusammensetzung nach einem der Ansprüche 1-5, wobei die anorganischen Partikel ein Übergangsmetalloxid, vorzugsweise ein Oxid von Ti, Zn, Y, Zr, La, Yb, Hf und/oder Ta, umfassen.

7. Polymerzusammensetzung nach einem der Ansprüche 1-6, wobei die anorganischen Partikel Zirconiumdioxid umfassen, wobei die Partikel vorzugsweise aus Zirconiumdioxid bestehen.

8. Polymerzusammensetzung nach einem der Ansprüche 1-7, wobei die Zusammensetzung mindestens 20, 25, 30 oder 35 Masse-% und höchstens 66, 62, 58, 54 oder 50 Masse-% der anorganischen Partikel umfasst.

9. Polymerzusammensetzung nach einem der Ansprüche 1-7, wobei die Polymerzusammensetzung aus a) 30-65 Masse-% eines biostabilen thermoplastischen Polyurethans, b) 35-70 Masse-% anorganischen Partikeln und c) 0-10 Masse-% anderer Verbindungen besteht, wobei die Summe von a) - c) 100 Masse-% beträgt.

10. Polymerzusammensetzung nach einem der Ansprüche 1-9, wobei das TPU ein Massenmittel der Molmasse (Mw) von 70-400 kDa aufweist, Mw vorzugsweise 80-250 kDa beträgt, gemessen mittels GPC basierend auf ASTM D5296-11.

11. Polymerzusammensetzung nach einem der Ansprüche 1-10 mit einem E-Modul von 800-2000 MPa, vorzugsweise 900-1800 MPa, gemessen an spritzfrischen Proben bei 20 °C (basierend auf ISO 527).

12. Polymerzusammensetzung nach einem der Ansprüche 1-11 mit einem E-Modul von 200-700 MPa, vorzugsweise 225-500 MPa, gemessen an in Wasser konditionierten Proben bei 37 °C (basierend auf ISO 527).

13. Polymerzusammensetzung nach einem der Ansprüche 1-12 mit einer Reißdehnung von mindestens 5 %, vorzugsweise mindestens 10 %, gemessen an spritzfrischen Proben bei 20 °C (basierend auf ISO 527).

14. Verfahren zur Herstellung der Polymerzusammensetzung nach einem der Ansprüche 1-13, das die folgenden Schritte umfasst:
• das Trocknen des Polyurethans und der anorganischen Partikel bis zu einem Feuchtigkeitsgrad von höchstens 250 ppm und
• das Schmelzmischen des getrockneten Polyurethans und der getrockneten Partikel in einem Doppelschneckenextruder, wobei die Temperatureinstellung der Zylinder des Extruders höchstens 210 °C beträgt.

15. Verfahren zur Herstellung eines orthopädischen Implantats oder zur Herstellung eines Knochenverankerungsteils eines orthopädischen Implantats, wie einem Stopfen oder einer Schraube, das einen Schritt des Spritzgießens des Implantats oder des Knochenverankerungsteils aus der Polymerzusammensetzung nach einem der Ansprüche 1-13 umfasst.

## Revendications

1. Composition de polymère comprenant un polyuréthane thermoplastique (TPU), biostable, biocompatible et 15 à 70 % en masse de particules inorganiques biocompatibles comprenant un composé de métal de transition, les particules inorganiques ayant une taille de particule (D₅₀) dans la plage de 0,1 à 5 um, comme mesurée selon la description.

2. Composition de polymère selon la revendication 1, le TPU ayant une dureté Shore de 40 à 90 ShD, préférablement de 60 à 85 ShD.

3. Composition de polymère selon la revendication 1 ou 2, le TPU comprenant un polyéther aliphatique, un polyester aliphatique, un polycarbonate aliphatique ou une combinaison correspondante dans des blocs souples, préférablement le TPU comprenant un polycarbonate aliphatique, comme un poly(carbonate d'hexaméthylène).

4. Composition de polymère selon l'une quelconque des revendications 1 à 3, le TPU étant un mélange de deux qualités de TPU biocompatible, biostable différant au moins en dureté, préférablement un mélange d'un TPU doté d'une dureté de 50 à 80 ShA et d'un TPU doté d'une dureté de 70 à 85 ShD.

5. Composition de polymère selon l'une quelconque des revendications 1 à 4, le TPU comprenant en outre 0,01 à 5 % en masse, sur la base de la quantité du polyuréthane, d'un ou plusieurs additifs biocompatibles.

6. Composition de polymère selon l'une quelconque des revendications 1 à 5, les particules inorganiques comprenant un oxyde de métal de transition, préférablement un oxyde d'au moins l'un parmi Ti, Zn, Y, Zr, La, Yb, Hf et Ta.

7. Composition de polymère selon l'une quelconque des revendications 1 à 6, les particules inorganiques comprenant une zircone, préférablement les particules étant constituées de zircone.

8. Composition de polymère selon l'une quelconque des revendications 1 à 7, la composition contenant au moins 20, 25, 30 ou 35 % en masse et au plus 66, 62, 58, 54 ou 50 % en masse des particules inorganiques.

9. Composition de polymère selon l'une quelconque des revendications 1 à 7, la composition de polymère étant constituée de a) 30 à 65 % en masse d'un polyuréthane thermoplastique biostable, b) 35 à 70 % en masse de particules inorganiques, et c) 0 à 10 % en masse d'autres composés , la somme de a) à c) étant de 100 % en masse.

10. Composition de polymère selon l'une quelconque des revendications 1 à 9, le TPU ayant une masse molaire moyenne en masse (Mw) de 70 à 400 kDa, préférablement Mw étant de 80 à 250 kDa, comme mesurée par GPC sur la base de la norme ASTM D5296-11.

11. Composition de polymère selon l'une quelconque des revendications 1 à 10, ayant un module E de 800 à 2 000 MPa, préférablement de 900 à 1 800 MPa, comme mesuré sur des échantillons secs-comme-moulés à 20 °C (sur la base de la norme ISO 527).

12. Composition de polymère selon l'une quelconque des revendications 1 à 11, ayant un module E de 200 à 700 MPa, préférablement de 225 à 500 MPa, comme mesuré sur des échantillons conditionnés dans de l'eau à 37 °C (sur la base de la norme ISO 527).

13. Composition de polymère selon l'une quelconque des revendications 1 à 12, ayant une élongation à la rupture d'au moins 5 %, préférablement d'au moins 10 %, comme mesurée sur des échantillons secs-comme-moulés à 20 °C (sur la base de la norme ISO 527).

14. Procédé de fabrication de la composition de polymère selon l'une quelconque des revendications 1 à 13, comprenant les étapes de
• séchage du polyuréthane et des particules inorganiques jusqu'à un taux d'humidité d'au plus 250 ppm ; et
• mélange en fusion du polyuréthane séché et des particules séchées dans une extrudeuse à double vis, avec un réglage de la température des cylindres de l'extrudeuse qui est d'au plus 210 °C.

15. Procédé de fabrication d'un implant orthopédique ou de fabrication d'une pièce d'ancrage d'os d'un implant orthopédique, comme un bouchon ou une vis, comprenant une étape de moulage par injection de l'implant ou de la pièce d'ancrage d'os à partir de la composition de polymère selon l'une quelconque des revendications 1 à 13.
